# EUROPEAN PATENT APPLICATION

(11) **EP 4 661 485 A1**
(43) Date of publication of application: **10.12.2025**
(21) Application number: 24756069.1
(22) Date of filing: 04.02.2024
(51) Int. Cl.: H04W 28/04

(54) **COMMUNICATION METHOD AND RELATED APPARATUS**

(30) Priority: 17.02.2023 CN 202310158867
(71) Applicant: Huawei Technologies Co., Ltd., Shenzhen, Guangdong 518129 (CN)
(72) Inventor: FAN, Qiang, Shenzhen, Guangdong 518129 (CN); GU, Zhifang, Shenzhen, Guangdong 518129 (CN)
(74) Representative: Goddar, Heinz J.
(86) International application number: PCT/CN2024/075815
(87) International publication number: WO 2024/169695

(57) **Abstract**

This application discloses a communication method and a related apparatus. The method includes: when a status report triggering condition and/or sending condition are/is met, sending a status report. If a first variable of a first data packet is less than a first threshold, the status report includes negative acknowledgement NACK information of the first data packet; or if a first variable of a first data packet is greater than or equal to a first threshold, the status report does not include NACK information of the first data packet. The first data packet is an unsuccessfully received data packet, and the first variable of the first data packet indicates a quantity of feedback times of the NACK information of the first data packet. According to this application, transmission of data that expires can be avoided, and data transmission effectiveness can be improved.

## Description

This application claims priority to Chinese Patent Application No. 202310158867.9, filed with the China National Intellectual Property Administration on February 17, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In wireless communication, due to a complex and variable channel environment, possible interference, and the like, there is a specific probability of decoding failure during data transmission. When a transport block (transport block, TB) fails to be transmitted, a network device (for example, a base station) may perform hybrid automatic repeat request (hybrid automatic repeat request, HARQ) retransmission on the TB. Performing HARQ retransmission can improve reliability of air interface data transmission. However, there is still a specific transmission failure probability, especially when a communication carrier is subject to strong interference. This is because HARQ retransmission can be performed only on the same carrier, and in this case, even if HARQ retransmission is performed, a data transmission success rate is low.

To further ensure the data transmission success rate, in an NR system, an automatic repeat request (automatic repeat request, ARQ) mechanism, namely, a feedback-based retransmission mechanism at an RLC layer, is introduced for an acknowledged mode (acknowledged mode, AM) of a radio link control (radio link control, RLC) entity. A basic idea of the ARQ mechanism is that an RLC entity on a receiving side may feed back an RLC status report to a transmitting side, to indicate a successfully received data packet and a data packet that fails to be received, and an RLC entity on the transmitting side may retransmit, based on the RLC status report, the data packet that fails to be transmitted.

After the RLC entity uses the ARQ mechanism in the AM mode for transmission, if quality of a lower-layer transmission link is poor, the data packet may expire and be useless after several retransmissions. However, the RLC entity still retransmits the unreceived data packet, occupying transmission resources of other data packets. This causes a resource waste and an increase in a delay of the other data packets.

### SUMMARY

Embodiments of this application disclose a communication method and a related apparatus, to avoid transmission of data that expires, and improve data transmission effectiveness.

According to a first aspect, an embodiment of this application discloses a 1^{st} communication method. The method is applied to a first communication apparatus. In the first aspect, the first communication apparatus serves as a receiving side of a second communication apparatus, and the second communication apparatus serves as a transmitting side of the first communication apparatus. In other words, the first communication apparatus may be briefly referred to as a receiving side, and the second communication apparatus may be briefly referred to as a transmitting side. A data packet sent by the transmitting side to the receiving side includes at least a first data packet described below, in other words, the second communication apparatus sends at least the first data packet to the first communication apparatus.

The first communication apparatus and the second communication apparatus may be terminal devices or network devices. When the first communication apparatus is a terminal device, the second communication apparatus may be a network device or another terminal device. When the first communication apparatus is a network device, the second communication apparatus may be a terminal device. In this embodiment of this application, a function performed by the terminal device may be performed by an apparatus (for example, a chip, a chip system, or a circuit) in the terminal device, or by an apparatus that can be used together with the terminal device. In this embodiment of this application, a function performed by the network device may be performed by an apparatus (for example, a chip, a chip system, or a circuit) in the network device, or by an apparatus that can be used together with the network device.

Optionally, each of the first communication apparatus and the second communication apparatus may be an RLC entity of a terminal device or an RLC entity of a network device. Correspondingly, a status report is an RLC status report, and the first data packet is an RLC SDU or a segment in an RLC SDU (RLC SDU segment).

The method includes: when a status report triggering condition and/or sending condition are/is met, sending a status report to the second communication apparatus. If a first variable of a first data packet is less than a first threshold, the status report includes negative acknowledgement NACK information of the first data packet; or if a first variable of a first data packet is greater than or equal to a first threshold, the status report does not include NACK information of the first data packet. The first data packet is an unsuccessfully received data packet, and the first variable of the first data packet indicates a quantity of feedback times of the NACK information of the first data packet. In this way, the first communication apparatus serving as the receiving side controls, based on a value relationship between a first variable of a data packet and the first threshold, whether a feedback status report includes NACK information of the data packet, so that the second communication apparatus serving as the transmitting side retransmits a data packet for which NACK information is fed back in the status report. This can avoid transmission of data that expires, and improve data transmission effectiveness.

In some feasible examples, the method further includes: if a first condition is met, initializing the first variable of the first data packet, where the first condition includes that the NACK information of the first data packet has not been fed back; or if a second condition is met, increasing the first variable of the first data packet by 1, where the second condition includes that the NACK information of the first data packet has been fed back.

Initializing the first variable of the first data packet means to set the first variable of the first data packet to an initial value. The initial value of the first variable may be 0. For example, feedback Count=0. Alternatively, the initial value of the first variable may be 1 or the like. The NACK information of the first data packet may be fed back by using the status report, to indicate an unsuccessfully received data packet and/or a successfully received data packet.

It may be understood that when the first communication apparatus meets the status report triggering condition and/or sending condition, for the unsuccessfully received first data packet, if the NACK information of the first data packet has been fed back in a previously sent status report, the first communication apparatus may increase the first variable of the first data packet by 1, for example, feedback_Count+1. Otherwise, if the NACK information of the first data packet has not been fed back in a previously sent status report, the first communication apparatus may initialize the first variable of the first data packet. In this way, the first communication apparatus can determine, based on a relationship between a value of a first variable of a data packet and the first threshold, whether to feed back NACK information of the data packet in a to-be-generated status report.

In some feasible examples, the first condition further includes that the status report is capable of including the NACK information of the first data packet or NACK information of a segment in the first data packet; and the second condition further includes that the status report is capable of including the NACK information of the first data packet or NACK information of a segment in the first data packet.

Considering that a size of data to be sent in the status report is limited by an allocated time-frequency resource, if there are insufficient time-frequency resources, some NACK information possibly cannot be put into the status report. After the first variable of the first data packet is determined, in addition to determining whether a condition for feeding back the NACK information of the first data packet is met, it needs to be further determined whether the to-be-generated status report is capable of including the NACK information of the first data packet or the NACK information of the segment, thereby further improving accuracy of determining the first variable.

In some feasible examples, the method further includes: if the second condition is met, and the first variable of the first data packet is less than the first threshold, increasing the first variable of the first data packet by 1. That is, it is first determined whether the second condition is met, and it is determined whether the first variable of the first data packet is less than the first threshold is determined. If the second condition is met, and the first variable of the first data packet is less than the first threshold, the first variable of the first data packet is increased by 1. In this way, if the first variable of the first data packet is less than the first threshold, the first communication apparatus considers that the first data packet or the segment in the first data packet is not successfully received, needs to feed back the NACK information to enable the second communication apparatus to perform retransmission, and increases the first variable of the first data packet by 1. If the first variable of the first data packet is greater than or equal to the first threshold, the first communication apparatus considers that a maximum quantity of feedback times is reached for the first data packet, and the first data packet no longer needs to be retransmitted, and therefore there is no need to include the NACK information of the first data packet in the status report.

In some feasible examples, the method further includes: updating a receiving-side variable. In this way, the first communication apparatus can update the receiving-side variable, so that a data packet that expires can be filtered out. This helps improve data transmission effectiveness.

In some feasible examples, the receiving-side variable includes a receiving-side next to-be-received sequence number variable, for example, RX_NEXT; and updating the receiving-side variable includes: if the first variable of the first data packet is greater than or equal to the first threshold, and a sequence number of the first data packet is equal to RX_NEXT, updating RX_NEXT to a sequence number of a next unsuccessfully received data packet whose first variable is less than the first threshold. In this way, the first communication apparatus can update RX_NEXT to a sequence number of a next unsuccessfully received data packet for which the maximum quantity of NACK feedback times is not reached. RX_NEXT is used as a lower boundary value of a receive window, and RX_NEXT is updated, so that a minimum value of a sequence number of a to-be-received data packet is increased. This helps avoid transmission of data that expires, and can improve data transmission effectiveness.

Alternatively, in some feasible examples, the receiving-side variable includes a receiving-side highest status variable, for example, RX_Highest_Status; and updating the receiving-side variable includes: if the first variable of the first data packet is greater than or equal to the first threshold, and a sequence number of the first data packet is equal to RX_Highest_Status, updating RX_Highest_Status to a sequence number of a next unsuccessfully received data packet whose first variable is less than the first threshold. In this way, the first communication apparatus can update RX_Highest_Status to an SN of a next unsuccessfully received data packet for which the maximum quantity of NACK feedback times is not reached. RX_Highest_Status is updated, so that a value of ACK_SN indicated in a to-be-generated RLC STATUS PDU is increased. This can avoid a data loss.

Alternatively, in some feasible examples, the receiving-side variable includes RX_Highest_Status and a receiving-side next to-be-received sequence number variable, for example, RX_Next_Status_Trigger; and updating the receiving-side variable includes: if a reassembly timer expires, updating RX_Highest_Status to a value that is greater than or equal to RX_Next_Status_Trigger and greater than or equal to a sequence number of an unsuccessfully received data packet whose first variable is less than the first threshold. In this way, if a retransmission timer expires, the first communication apparatus triggers uploading of the status report. In this case, RX_Highest_Status may be updated to a maximum value between RX_Next_Status_Trigger and a value that is greater than or equal to the sequence number of the unsuccessfully received data packet whose first variable is less than the first threshold, so that a value of ACK_SN indicated in a to-be-generated RLC STATUS PDU is increased. This can avoid a data loss.

In some feasible examples, the method further includes: if the first data packet or the segment in the first data packet is received, and the first variable of the first data packet is greater than or equal to the first threshold, discarding the received first data packet or the received segment in the first data packet. That is, when the first variable of the first data packet is greater than or equal to the first threshold, the first data packet is discarded even if the first data packet or the segment in the first data packet is not previously successfully received, so that the received first data packet or the received segment in the first data packet is discarded, to avoid continued processing and delivery of a data packet that expires.

In some feasible examples, the NACK information of the first data packet indicates the sequence number of the first data packet. In this way, it can be determined, based on information in the status report and the sequence number of the first data packet, whether the status report includes the NACK information of the first data packet.

According to a second aspect, an embodiment of this application discloses a 2^{nd} communication method. The method is applied to a first communication apparatus. In the second aspect, if a terminal device serves as a receiving side of a network device, and the network device serves as a transmitting side of the terminal device, the first communication apparatus may be a terminal device, and a second communication apparatus may be a network device. Further, the first communication apparatus may be an RLC entity of the terminal device, and the second communication apparatus may be an RLC entity of the network device.

Alternatively, in the second aspect, if a terminal device serves as a transmitting side of a network device, the network device serves as a receiving side of the terminal device, and the network device uses a central unit (central unit, CU)-distributed unit (distributed unit, DU) split architecture, the first communication apparatus may be a DU of the network device, and a second communication apparatus may be a CU of the network device.

The method includes: receiving a first indication from the second communication apparatus, where the first indication indicates to send statistical information of a second data packet, and a first variable of the second data packet is greater than or equal to a first threshold; and sending the statistical information of the second data packet to the second communication apparatus. In this way, the second communication apparatus can configure or adjust a time-frequency resource based on the statistical information of the second data packet. This can improve accuracy of time-frequency resource allocation, and help improve communication quality.

In some feasible examples, the first indication includes a first time threshold, and the first indication indicates to periodically report the statistical information of the second data packet based on the first time threshold; or the first indication includes a reporting condition, and the first indication indicates to send the statistical information of the second data packet when the reporting condition is met. In this way, statistical information of a data packet whose first variable exceeds the first threshold is periodically reported, so that the second communication apparatus can periodically determine a data receiving status, and then determine whether to adjust a time-frequency resource. This can improve accuracy of time-frequency resource allocation, and help improve communication quality. The statistical information of the second data packet is reported when the reporting condition is met. This can save time-frequency resources occupied for reporting, and help improve reporting effectiveness.

In some feasible examples, the statistical information of the second data packet includes a proportion value of the second data packet, the reporting condition includes a second time threshold and a proportion threshold, and that the reporting condition is met includes: the proportion value of the second data packet is greater than or equal to the proportion threshold within the second time threshold. In this way, it is determined, based on time and the proportion value, whether to report the statistical information of the second data packet. This can improve reporting effectiveness.

According to a third aspect, an embodiment of this application discloses a 3^{rd} communication method. The method is applied to an RLC entity of a first communication apparatus. For the first communication apparatus and a second communication apparatus in this aspect, refer to the descriptions of the first aspect. Details are not described herein again.

The method includes: sending a second indication to a packet data convergence protocol (packet data convergence protocol, PDCP) entity of the first communication apparatus. The second indication includes a sequence number of a second data packet in the RLC entity of the first communication apparatus, and the second indication indicates that a first variable of the second data packet is greater than or equal to a first threshold, or indicates that the second data packet expires and is useless. In this way, the PDCP entity of the first communication apparatus can determine, based on the second indication, a data packet for which there is no need to wait for receiving. This reduces a delay in continued data packet processing, and can improve data transmission efficiency and effectiveness.

According to a fourth aspect, an embodiment of this application discloses a 4^{th} communication method. The method is applied to a second communication apparatus. For a first communication apparatus and the second communication apparatus in this aspect, refer to the descriptions of the first aspect. Details are not described herein again.

The method includes: receiving a status report from the first communication apparatus; and if the status report includes NACK information of a first data packet, determining that a first variable of the first data packet is less than a first threshold, and retransmitting the first data packet or an unsuccessfully received segment in the first data packet to the first communication apparatus, where the first data packet is an unsuccessfully received data packet, and the first variable of the first data packet indicates a quantity of feedback times of the NACK information of the first data packet. In this way, the second communication apparatus retransmits a data packet or an unsuccessfully received segment in a data packet for which NACK information is fed back in the status report. Because a first variable of the data packet for which the NACK information is indicated in the status report is less than the first threshold and the data packet is not successfully received, it may be understood as that data that does not expire is transmitted. Therefore, transmission of data that expires can be avoided, and data transmission effectiveness can be improved.

In some feasible examples, the method further includes: if a quantity of retransmissions of the first data packet is equal to a second threshold, discarding the first data packet. The second threshold may be a maximum retransmission threshold, for example, maxRetxThreshold. When the quantity of retransmissions of the first data packet is equal to the second threshold, the first data packet is discarded, so that transmission of a data packet for which a quantity of retransmissions is exceeded can be avoided.

According to a fifth aspect, an embodiment of this application discloses a 5^{th} communication method. The method is applied to a second communication apparatus. For the second communication apparatus and a first communication apparatus in this aspect, refer to the descriptions of the second aspect. Details are not described herein again.

The method includes: sending a first indication to the first communication apparatus, where the first indication indicates to send statistical information of a second data packet, and a first variable of the second data packet is greater than or equal to a first threshold; and receiving the statistical information of the second data packet from the first communication apparatus.

In some feasible examples, the first indication includes a first time threshold, and the first indication indicates to periodically report the statistical information of the second data packet based on the first time threshold; or the first indication includes a reporting condition, and the first indication indicates to send the statistical information of the second data packet when the reporting condition is met.

In some feasible examples, the statistical information of the second data packet includes a proportion value of the second data packet, the reporting condition includes a second time threshold and a proportion threshold, and that the reporting condition is met includes: the proportion value of the second data packet is greater than or equal to the proportion threshold within the second time threshold.

It should be understood that specific content of the fifth aspect corresponds to the content of the second aspect. For corresponding features of the fifth aspect and beneficial effects achieved, refer to the descriptions of the second aspect. To avoid repetition, detailed descriptions are properly omitted herein.

According to a sixth aspect, an embodiment of this application discloses a 6^{th} communication method. The method is applied to a PDCP entity of a first communication apparatus. For the first communication apparatus and a second communication apparatus in this aspect, refer to the descriptions of the first aspect. Details are not described herein again.

The method includes: receiving a second indication sent by an RLC entity of the first communication apparatus, where the second indication includes a sequence number of a second data packet in the RLC entity of the first communication apparatus, and the second indication indicates that a first variable of the second data packet is greater than or equal to a first threshold, or indicates that the second data packet expires and is useless; determining a sequence number of the second data packet in the PDCP entity of the first communication apparatus; and updating a receive window and/or a receive variable based on the sequence number of the second data packet in the PDCP entity of the first communication apparatus. In this way, the PDCP entity of the first communication apparatus can determine, based on the second indication, a sequence number, in the RLC entity, of a data packet for which there is no need to wait for receiving. After determining the sequence number of the second data packet in the PDCP entity of the first communication apparatus, the PDCP entity of the first communication apparatus may update the receive window and/or the receive variable of the PDCP entity. This reduces a delay in continued data packet processing, and can improve data transmission efficiency and effectiveness.

According to a seventh aspect, an embodiment of this application provides a 1^{st} first communication apparatus, including a transceiver unit, configured to: when a status report triggering condition and/or sending condition are/is met, send a status report to a second communication apparatus. If a first variable of a first data packet is less than a first threshold, the status report includes NACK information of the first data packet; or if a first variable of a first data packet is greater than or equal to a first threshold, the status report does not include NACK information of the first data packet. The first data packet is an unsuccessfully received data packet, and the first variable of the first data packet indicates a quantity of feedback times of the NACK information of the first data packet.

In some feasible examples, the apparatus further includes a processing unit, configured to: if a first condition is met, initialize the first variable of the first data packet, where the first condition includes that the NACK information of the first data packet has not been fed back; or if a second condition is met, increase the first variable of the first data packet by 1, where the second condition includes that the NACK information of the first data packet has been fed back.

In some feasible examples, the first condition further includes that the status report is capable of including the NACK information of the first data packet or NACK information of a segment in the first data packet; and the second condition further includes that the status report is capable of including the NACK information of the first data packet or NACK information of a segment in the first data packet.

In some feasible examples, the processing unit is further configured to: if the second condition is met, and the first variable of the first data packet is less than the first threshold, increase the first variable of the first data packet by 1.

In some feasible examples, the first communication apparatus serves as a receiving side of the second communication apparatus, and the processing unit is further configured to update a receiving-side variable.

In some feasible examples, the receiving-side variable includes RX_NEXT; and the processing unit is specifically configured to: if the first variable of the first data packet is greater than or equal to the first threshold, and a sequence number of the first data packet is equal to RX_NEXT, update RX_NEXT to a sequence number of a next unsuccessfully received data packet whose first variable is less than the first threshold.

Alternatively, in some feasible examples, the receiving-side variable includes RX_Highest_Status; and the processing unit is specifically configured to: if the first variable of the first data packet is greater than or equal to the first threshold, and a sequence number of the first data packet is equal to RX_Highest_Status, update RX_Highest_Status to a sequence number of a next unsuccessfully received data packet whose first variable is less than the first threshold.

Alternatively, in some feasible examples, the receiving-side variable includes RX_Highest_Status and RX_Next_Status_Trigger; and the processing unit is specifically configured to: if a reassembly timer expires, update RX_Highest_Status to a value that is greater than or equal to RX_Next_Status_Trigger and greater than or equal to a sequence number of an unsuccessfully received data packet whose first variable is less than the first threshold.

In some feasible examples, the processing unit is configured to: if the first data packet or the segment in the first data packet is received, and the first variable of the first data packet is greater than or equal to the first threshold, discard the received first data packet or the received segment in the first data packet.

In some feasible examples, the NACK information of the first data packet indicates the sequence number of the first data packet.

It should be understood that the seventh aspect may be performed by the first communication apparatus, and specific content of the seventh aspect corresponds to the content of the first aspect. For corresponding features of the seventh aspect and beneficial effects achieved, refer to the descriptions of the first aspect. To avoid repetition, detailed descriptions are properly omitted herein.

According to an eighth aspect, an embodiment of this application provides a 2^{nd} first communication apparatus, including a transceiver unit, configured to: receive a first indication from a second communication apparatus, where the first indication indicates to send statistical information of a second data packet, and a first variable of the second data packet is greater than or equal to a first threshold; and send the statistical information of the second data packet to the second communication apparatus.

In some feasible examples, the first indication includes a first time threshold, and the first indication indicates to periodically report the statistical information of the second data packet based on the first time threshold; or the first indication includes a reporting condition, and the first indication indicates to send the statistical information of the second data packet when the reporting condition is met.

In some feasible examples, the statistical information of the second data packet includes a proportion value of the second data packet, the reporting condition includes a second time threshold and a proportion threshold, and that the reporting condition is met includes: the proportion value of the second data packet is greater than or equal to the proportion threshold within the second time threshold.

It should be understood that the eighth aspect may be performed by the first communication apparatus, and specific content of the eighth aspect corresponds to the content of the second aspect. For corresponding features of the eighth aspect and beneficial effects achieved, refer to the descriptions of the second aspect. To avoid repetition, detailed descriptions are properly omitted herein.

According to a ninth aspect, an embodiment of this application provides a 3^{rd} first communication apparatus, including a transceiver unit, configured to send a second indication to a PDCP entity of the first communication apparatus. The second indication includes a sequence number of a second data packet in an RLC entity of the first communication apparatus, and the second indication indicates that a first variable of the second data packet is greater than or equal to a first threshold, or indicates that the second data packet expires and is useless.

It should be understood that the ninth aspect may be performed by the first communication apparatus, and specific content of the ninth aspect corresponds to the content of the third aspect. For corresponding features of the ninth aspect and beneficial effects achieved, refer to the descriptions of the third aspect. To avoid repetition, detailed descriptions are properly omitted herein.

According to a tenth aspect, an embodiment of this application provides a 1^{st} second communication apparatus, including: a transceiver unit, configured to receive a status report from a first communication apparatus; and a processing unit, configured to: if the status report includes NACK information of a first data packet, determine that a first variable of the first data packet is less than a first threshold, and retransmit the first data packet or an unsuccessfully received segment in the first data packet to the first communication apparatus, where the first data packet is an unsuccessfully received data packet, and the first variable of the first data packet indicates a quantity of feedback times of the NACK information of the first data packet.

In some feasible examples, the processing unit is further configured to: if a quantity of retransmissions of the first data packet is equal to a second threshold, discard the first data packet.

It should be understood that the tenth aspect may be performed by the second communication apparatus, and specific content of the tenth aspect corresponds to the content of the fourth aspect. For corresponding features of the tenth aspect and beneficial effects achieved, refer to the descriptions of the fourth aspect. To avoid repetition, detailed descriptions are properly omitted herein.

According to an eleventh aspect, an embodiment of this application discloses a 2^{nd} second communication apparatus, including a transceiver unit, configured to: send a first indication to a first communication apparatus, where the first indication indicates to send statistical information of a second data packet, and a first variable of the second data packet is greater than or equal to a first threshold; and receive the statistical information of the second data packet from the first communication apparatus.

In some feasible examples, the first indication includes a first time threshold, and the first indication indicates to periodically report the statistical information of the second data packet based on the first time threshold; or the first indication includes a reporting condition, and the first indication indicates to send the statistical information of the second data packet when the reporting condition is met.

In some feasible examples, the statistical information of the second data packet includes a proportion value of the second data packet, the reporting condition includes a second time threshold and a proportion threshold, and that the reporting condition is met includes: the proportion value of the second data packet is greater than or equal to the proportion threshold within the second time threshold.

It should be understood that the eleventh aspect may be performed by the second communication apparatus, and specific content of the eleventh aspect corresponds to the content of the fifth aspect. For corresponding features of the eleventh aspect and beneficial effects achieved, refer to the descriptions of the fifth aspect (namely, the second aspect). To avoid repetition, detailed descriptions are properly omitted herein.

According to a twelfth aspect, an embodiment of this application discloses a 3^{rd} second communication apparatus, including: a transceiver unit, configured to receive a second indication sent by an RLC entity of a first communication apparatus, where the second indication includes a sequence number of a second data packet in the RLC entity of the first communication apparatus, and the second indication indicates that a first variable of the second data packet is greater than or equal to a first threshold, or indicates that the second data packet expires and is useless; and a processing unit, configured to: determine a sequence number of the second data packet in a PDCP entity of the first communication apparatus; and update a receive window and/or a receive variable based on the sequence number of the second data packet in the PDCP entity of the first communication apparatus.

It should be understood that the twelfth aspect may be performed by the PDCP entity of the first communication apparatus, and specific content of the twelfth aspect corresponds to the content of the sixth aspect. For corresponding features of the twelfth aspect and beneficial effects achieved, refer to the descriptions of the sixth aspect (namely, the third aspect). To avoid repetition, detailed descriptions are properly omitted herein.

According to a thirteenth aspect, an embodiment of this application provides a communication apparatus. The communication apparatus may be a first communication apparatus or a second communication apparatus. The communication apparatus may include a processor. The processor is configured to enable, by executing instructions in a storage or through a logic circuit, the communication apparatus to perform the communication method described in the first aspect, the second aspect, the third aspect, or the feasible example of any one of the first aspect, the second aspect, and the third aspect.

In some feasible examples, the communication apparatus further includes one or more of the storage or a transceiver. The transceiver is configured to send and receive data and/or signaling.

According to a fourteenth aspect, this application provides a communication system. The communication system includes a first communication apparatus and a second communication apparatus. When running in the communication system, the first communication apparatus and the second communication apparatus are configured to perform the communication method described in the first aspect, the second aspect, the third aspect, or the feasible example of any one of the first aspect, the second aspect, and the third aspect.

According to a fifteenth aspect, this application provides a computer-readable storage medium. The computer-readable storage medium stores instructions. When the instructions are run by a processor, the communication method described in the first aspect, the second aspect, the third aspect, or the feasible example of any one of the first aspect, the second aspect, and the third aspect is performed.

According to a sixteenth aspect, this application provides a computer program product. The computer program product includes instructions. When the instructions are run by a processor, the communication method described in the first aspect, the second aspect, the third aspect, or the feasible example of any one of the first aspect, the second aspect, and the third aspect is performed.

According to a seventeenth aspect, this application provides a 7^{th} communication method, including the communication method described in the first aspect, the second aspect, the third aspect, or the feasible example of any one of the first aspect, the second aspect, and the third aspect.

It should be understood that mutual reference may be made to the implementation and beneficial effects of the foregoing plurality of aspects of this application.

### BRIEF DESCRIPTION OF DRAWINGS

The following describes accompanying drawings used in embodiments of this application.
FIG. 1 is a diagram of an architecture of a communication system according to an embodiment of this application;
FIG. 2 is a diagram of a structure of a user plane protocol stack according to an embodiment of this application;
FIG. 3 is a diagram of a structure between a PDCP entity and an RLC entity according to an embodiment of this application;
FIG. 4 is a diagram of an architecture of another communication system according to an embodiment of this application;
FIG. 5 is a schematic flowchart of ARQ mechanism-based data transmission according to an embodiment of this application;
FIG. 6 is a schematic flowchart of ARQ mechanism-based data retransmission according to the conventional technology;
FIG. 7 is a diagram of interaction in a communication method according to an embodiment of this application;
FIG. 8 is a diagram of a scenario of a communication method according to an embodiment of this application;
FIG. 9 is a diagram of interaction in another communication method according to an embodiment of this application;
FIG. 10 is a diagram of interaction in still another communication method according to an embodiment of this application;
FIG. 11 is a diagram of transmitting a PDCP control PDU according to an embodiment of this application;
FIG. 12 is a diagram of a data format of a PDCP control PDU transmitted on another bearer according to an embodiment of this application;
FIG. 13 is a diagram of a structure of a first communication apparatus according to an embodiment of this application;
FIG. 14 is a diagram of a structure of a second communication apparatus according to an embodiment of this application;
FIG. 15 is a diagram of a structure of a communication apparatus according to an embodiment of this application; and
FIG. 16 is a diagram of a structure of a terminal device according to an embodiment of this application.

### DESCRIPTION OF EMBODIMENTS

The technical solutions in embodiments of this application may be applied to various communication systems, for example, a long term evolution (long term evolution, LTE) system, a new radio (new radio, NR) system, a public land mobile network (public land mobile network, PLMN) system, a long term evolution advanced (LTE advanced, LTE-A) system, a device-to-device (device-to-device, D2D) communication system, a machine-to-machine (machine-to-machine, M2M) communication system, an internet of things (internet of things, IoT), a narrowband internet of things (narrowband internet of things, NB-IoT), an integrated sensing and communication system, a frequency division duplex (frequency division duplex, FDD) system, a time division duplex (time division duplex, TDD) system, a non-terrestrial communication (non-terrestrial communication, NTN) system, a wireless projection communication system, and an integrated access and backhaul (integrated access and backhaul, IAB) communication system, and are applied to a communication system (for example, a 6G communication system) evolved from a 5G communication system, or may be applied to a non-3rd generation partnership project (3rd generation partnership project, 3GPP) communication system or the like. This is not limited in this application.

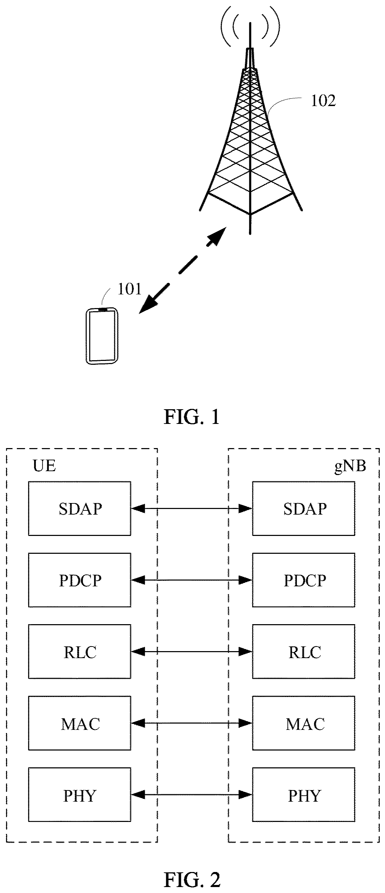

FIG. 1 is a diagram of an architecture of a communication system according to an embodiment of this application. As shown in FIG. 1, the communication system may include at least one terminal device 101 and at least one network device 102. The terminal device 101 may be connected to the network device 102 in a wireless manner. The terminal device 101 may be at a fixed location, or may be movable. The terminal device 101 and the network device 102 may be deployed on land, for example, deployed as indoor or outdoor devices, handheld or vehicle-mounted devices, or the like. Alternatively, the terminal device 101 and the network device 102 may be deployed on a water surface, an airplane, a balloon, and a satellite in the air, or the like. This is not limited in this application.

In embodiments of this application, the terminal device 101 may be an entity that is on a user side and that is configured to receive or transmit a signal. The terminal device 101 may be a mobile phone (mobile phone), a tablet computer (Pad), a computer having a wireless transceiver function, a VR terminal device, an AR terminal device, customer-premises equipment (customer-premises equipment, CPE), an IoT terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal in integrated sensing and communication, a vehicle-mounted terminal, a vehicle with a vehicle-to-vehicle (vehicle-to-vehicle, V2X) communication capability, an intelligent connected vehicle, an uncrewed aerial vehicle with an uncrewed aerial vehicle-to-uncrewed aerial vehicle (UAV-to-UAV, U2U) communication capability, a personal digital assistant (personal digital assistant, PDA), a wireless communication module/chip in various devices such as a smart factory or a smart grid, or the like. This is not limited herein.

The terminal device 101 may be sometimes referred to as user equipment (user equipment, UE), a terminal (terminal), an access terminal, a UE unit, a UE station, a mobile device, a mobile station (mobile station), a mobile terminal, a mobile client, a mobile unit (mobile unit), a remote station, a remote terminal device, a remote unit, a wireless unit, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a PDA, a handheld device having a wireless communication function, a computing device, another processing device connected to a wireless modem, a vehicle-mounted device, a wearable device, a terminal device in a PLMN evolved from a 5G communication system, a terminal device in a non-public network (non-public network, NPN) evolved from a 5G communication system, or the like. In the 5G communication system, the terminal device 101 establishes a signal connection and a data connection to the network device 102 by using a new radio technology, to transmit a control signal and service data to a data network.

The network device 102 may be an entity configured to transmit or receive a signal, and is mainly configured to: implement functions such as a radio physical control function, resource scheduling and radio resource management, radio access control, and mobility management, and provide a reliable wireless transmission protocol, a reliable data encryption protocol, and the like. The network device 102 may support wired access, or may support wireless access, and may be referred to as an access network device below.

Optionally, the access network device may be an access network (access network, AN)/radio access network (radio access network, RAN) device, and includes a plurality of AN/RAN nodes. The AN/RAN node may include but is not limited to an access point (access point, AP), an enhanced NodeB (enhanced NodeB, eNB), a home base station (for example, a home evolved NodeB, or a home NodeB, HNB), a baseband unit (baseband unit, BBU), a next generation NodeB (NR NodeB, gNB), a transmission reception point (transmission reception point, TRP), a transmission point (transmission point, TP), or another access node, for example, a wireless relay node or a wireless backhaul node. Alternatively, the AN/RAN node may be one or more formed antenna panels, or may be a network node that forms a gNB or a transmission point, for example, a BBU or a distributed unit (distributed unit, DU), or may be a device that undertakes a base station function in a communication system such as D2D, V2X, M2M or U2U. Alternatively, the AN/RAN node may be a radio controller in a cloud radio access network (cloud radio access network, CRAN) scenario, or may be an open access network (open RAN, O-RAN or ORAN), or may be a base station in a communication system evolved from the 5G communication system, for example, an xNodeB in a 6G communication system, or may be an access network device in a PLMN network evolved from the 5G communication system, or the like. This is not limited herein.

Main functions of the access network device include radio resource management, compression of an internet protocol (internet protocol, IP) header, encryption of a user data flow, selection of a mobility management entity (mobility management entity, MME) during user equipment attachment, routing of user plane data to a serving gateway (serving gateway, SGW), organization and sending of a paging message, organization and sending of a broadcast message, measurement for mobility or scheduling purposes, configuration of a measurement report, and the like.

Optionally, the network device 102 may include a CU, a DU, and the like. The CU may be further classified into a CU-control plane (control plane, CP), a CU-user plane (user plane, UP), and the like. Alternatively, the network device 102 may be a radio unit (radio unit, RU), or the like. Alternatively, the network device 102 may be an ORAN architecture or the like. A specific deployment manner of the network device is not limited in embodiments of this application. For example, when the network device 102 is an ORAN architecture, the network device 102 may be an access network device in the ORAN, a module in the access network device, or the like. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU.

One CU may be connected to one DU. Alternatively, one CU may be connected to a plurality of DUs. This can save costs and facilitate network expansion. In other words, the access network device may include one CU and one or more DUs. The CU is connected to the DU through an F1 interface, and the CU is connected to a core network through a next generation (next generation, NG) interface.

Split between the CU and the DU may be split based on a protocol stack. In a possible manner, a radio resource control (radio resource control, RRC) layer, a service data adaptation protocol (service data adaptation protocol, SDAP) layer, and a PDCP layer are deployed on the CU, and a remaining RLC layer, media access control (media access control, MAC) layer, and physical (physical, PHY) layer are deployed on the DU.

FIG. 2 is a diagram of a structure of a user plane protocol stack according to an embodiment of this application. In FIG. 2, an example in which a network device is a gNB and a terminal device is UE is used for description. As shown in FIG. 2, a user plane protocol stack between the UE and the gNB may include an SDAP layer, a PDCP layer, an RLC layer, a MAC layer, and a PHY layer. The SDAP layer includes a service data application protocol, and main functions are to mark a quality of service (quality of service, QoS) flow identifier in an uplink/downlink data packet, and map a QoS flow to a data radio bearer (data radio bearer, DRB). Transmission of a user plane data packet is mainly completed through the DRB. Based on different QoS flows, data between the UE and the gNB may be carried on a plurality of DRBs.

The PDCP layer is mainly responsible for providing a transmission service for a radio bearer (radio bearer, RB), and main functions include addition of a sequence number (sequence number, SN), compression, encryption and decryption, integrity protection, verification, and the like. The RLC layer communicates with the PDCP layer through an RLC channel, and communicates with the MAC layer through a logical channel, and main functions include segmentation and reassembly of an RLC service data unit (service data unit, SDU), ARQ error correction, duplicate detection, and the like.

The MAC layer is mainly responsible for processing mapping between logical channels and transport channels and scheduling radio resources, and main functions include mapping between logical channels and transport channels, multiplexing and demultiplexing of logical channels, scheduling, and the like. The PHY layer is located at a lowest layer of an air interface protocol stack, and is mainly responsible for coding, modulation, multi-antenna processing, time-frequency resource mapping, and the like.

The SDAP layer, the PDCP layer, the RLC layer, the MAC layer, and the PHY layer may also be referred to as an SDAP entity, a PDCP entity, an RLC entity, a MAC entity, and a PHY entity, or may be referred to as an SDAP network element, a PDCP network element, an RLC network element, a MAC network element, and a PHY network element, or may be briefly referred to as an SDAP, a PDCP, an RLC, a MAC, and a PHY. It should be understood that the foregoing network elements are merely examples. In practice, the network elements may be network elements implemented on dedicated hardware, may be software instances running on dedicated hardware, or may be instances of virtualized functions on an appropriate platform. For example, the virtualization platform may be a cloud platform. In a future communication system, the foregoing network elements may have other names. This is not limited in this application.

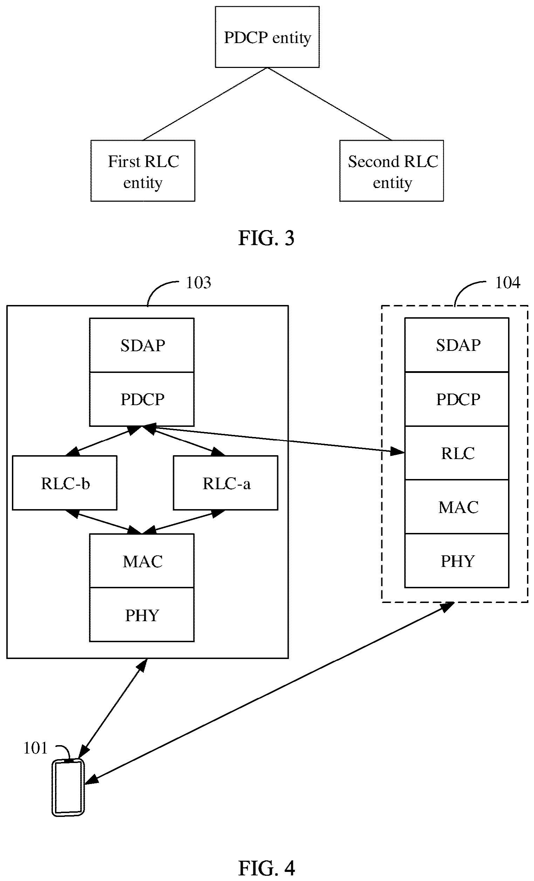

One radio bearer (radio bearer, RB) may correspond to one PDCP entity, one PDCP entity may correspond to one or more RLC entities, and one or more RLC entities may correspond to one MAC entity. For example, FIG. 3 is a diagram of a structure between a PDCP entity and an RLC entity according to an embodiment of this application. As shown in FIG. 3, the PDCP entity is associated with a first RLC entity and a second RLC entity. The first RLC entity and the second RLC entity may transmit different content or same content, and a data transmission success rate can be improved when the same content is transmitted. Alternatively, the first RLC entity and the second RLC entity may transmit different content, to improve data transmission efficiency.

The network device 102 may further include a core network device, configured to be responsible for maintaining subscription data of a mobile network, managing a network element of the mobile network, and providing functions such as session management, mobility management, policy management, and security authentication for the terminal device 101.

In embodiments of this application, communication may be performed between the terminal device 101 and the network device 102, between network devices 102, and between terminal devices 101 by using a licensed spectrum (licensed spectrum), or by using an unlicensed spectrum (unlicensed spectrum), or by using both a licensed spectrum and an unlicensed spectrum. Spectrum resources used by the terminal device 101 and the network device 102 are not limited in this application. Uplink (uplink) communication or downlink (downlink) communication may be performed between the terminal device 101 and the network device 102 through a user equipment-user equipment (user equipment-user equipment, uu) interface, and sidelink (sidelink) communication may be performed between terminal devices 101 through a sidelink interface (PC5 interface).

Two terminal devices 101 may be respectively located in coverage areas of different network devices 102, or two terminal devices 101 may be located in coverage areas of a same network device 102. If a single terminal device 101 is located in a same coverage area of two network devices 102, the two network devices 102 may be used to perform coordinated multi-station transmission. It should be understood that when both the two network devices 102 send same data and/or information to the terminal device 101, communication reliability can be improved.

FIG. 4 is a diagram of an architecture of another communication system according to an embodiment of this application. The architecture may be understood as a PDCP splitting architecture. As shown in FIG. 4, the communication system may include a terminal device 101, a first network device 103, and a second network device 104. For the network device and the terminal device, refer to the descriptions in FIG. 1 and FIG. 2. Details are not described herein again. In FIG. 4, the architecture of the communication system is described by using an example in which the terminal device 101 is UE, a first RLC entity is an RLC-a, and a second RLC entity is an RLC-b. User plane protocol stacks of the first network device 103 and the second network device 104 may include an SDAP layer, a PDCP layer, an RLC layer, a MAC layer, and a PHY layer. In addition, a PDCP entity of the first network device 103 is associated with the first RLC entity (for example, the RLC-a) and the second RLC entity (for example, the RLC-b). With reference to the descriptions in FIG. 3, the first RLC entity and the second RLC entity may be configured to transmit same or different content. The first network device 103 and the second network device 104 may send same or different content to the terminal device 101.

It may be understood that when the first network device 103 and the second network device 104 send a same RLC SDU to the terminal device 101, or the first network device 103 sends a same RLC SDU to the terminal device 101 through the RLC-a and the RLC-b, communication reliability can be improved. If an RLC SDU or a segment in an RLC SDU sent by the RLC-a of the first network device 103 to the terminal device 101 is not successfully received, the RLC SDU or the unsuccessfully received segment in the RLC SDU may be sent through the RLC-b of the first network device 103 or the second network device 104, or if an RLC SDU or a segment in an RLC SDU sent by the RLC-b of the first network device 103 to the terminal device 101 is not successfully received, the RLC SDU or the unsuccessfully received segment in the RLC SDU may be sent through the RLC-a of the first network device 103 or the second network device 104, to improve a data transmission success rate.

This application is not limited to the PDCP splitting architecture, and may be further applied to architectures such as core network splitting (that is, data from a core network is copied and distributed to a first network device and a second network device), service data adaptation protocol (service data adaptation protocol, SDAP) splitting, and RLC splitting. Communication reliability can be improved by using the splitting architecture.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which may also be referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable device, carrier, or medium. For example, the computer-readable medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive). Various storage media described in this specification may represent one or more devices and/or other machine-readable media configured to store information. The term "machine-readable media" may include but is not limited to a radio channel, and various other media that can store, include, and/or carry instructions and/or data.

It should be noted that a quantity and a type of network devices and terminal devices in the network architecture shown in FIG. 1 are merely examples, and embodiments of this application are not limited thereto. For example, more or fewer terminal devices that communicate with the network device may be included. For another example, more or fewer core network devices that communicate with the network device may be included. For conciseness of description, these devices are not described one by one in the accompanying drawings.

In the network architecture shown in FIG. 1 or FIG. 4, although the network device and the terminal device are shown, the application scenario may include but is limited to the network device and the terminal device, for example, may further include a device configured to carry a virtualized network function. This is clear to persons skilled in the art. Details are not described herein again.

For ease of understanding embodiments of this application, the following first provides definitions of technical terms that may appear in embodiments of this application. Terms used in implementations of this application are merely used to explain specific embodiments of this application, and are not intended to limit this application.

### (1) AM, unacknowledged mode (unacknowledged mode, UM), and transparent mode (transparent mode, TM)

The three modes are transmission modes provided at an RLC layer to meet QoS requirements of different types of data transmission. The TM mode is used to transmit data on a signaling radio bearer 0 (signaling radio bearer 0, SRB 0), paging data, and a broadcast system message. This type of message cannot be segmented, and data is transparently transmitted through the RLC layer.

The UM mode is applicable to real-time services with high requirements for a latency and error tolerance. After a data packet is transmitted through a UM RLC entity, it is considered that transmission ends. Even if the data packet is lost during transmission through an air interface, the RLC layer does not retransmit the data packet. For ultra-reliable and low-latency communication (ultra-reliable and low-latency communication, URLLC) applications with very high requirements for both a latency and reliability, a UM RLC mode usually may be used together with other reliability improvement mechanisms, for example, PDCP duplication (PDCP duplication) and slot aggregation (slot aggregation) mechanisms. These mechanisms result in a reduction in resource utilization.

The AM mode is applicable to non-real-time services with very high requirements for reliability, for example, web browsing, file transfer protocol (file transfer protocol, FTP) file download, and signaling transmission. A data transmission loss needs to be avoided as much as possible for this type of service. A DRB used for service data transmission may be configured as a DRB in an RLC AM mode and a DRB in an RLC UM mode. A difference between the DRB in the RLC AM mode and the DRB in the RLC UM mode is that a data packet transmitted on the DRB in the RLC AM mode needs to be fed back, and lossless transmission needs to be ensured as much as possible, while a packet transmitted on the DRB in the RLC UM mode does not need to be fed back, and no lossless transmission needs to be ensured.

### (2) HARQ retransmission at a MAC layer

In wireless communication, due to a complex and variable channel environment, possible interference, and the like, there is a specific probability of decoding failure during data transmission. During NR Uu communication, when a TB fails to be transmitted, a network device (for example, a base station) may perform HARQ retransmission on the TB. Retransmitted data may be combined with previously transmitted data for decoding, to improve a decoding success rate. In an NR system, the base station may limit a quantity of uplink/downlink HARQ retransmissions. For example, the base station usually limits a TB to a maximum of five HARQ retransmissions. Whether a scheduled resource is used for new HARQ transmission or HARQ retransmission is indicated by whether an NDI field in scheduling DCI is flipped.

### (3) ARQ mechanism at an RLC layer

Through HARQ retransmission, reliability of air interface data transmission can be improved. However, there is still a specific transmission failure probability, especially when a communication carrier is subject to strong interference. This is because HARQ retransmission can be performed only on the same carrier, and in this case, even if HARQ retransmission is performed, a data transmission success rate is low.

To further ensure the data transmission success rate in an NR system, an RLC ARQ mechanism, namely, a feedback-based retransmission mechanism at the RLC layer, is introduced for an AM RLC entity. A basic idea of ARQ is that an AM RLC entity on a receiving side may feed back an RLC status report (for example, an RLC STATUS PDU) to a transmitting side, to indicate a successfully received data packet and a data packet that fails to be received, and an RLC entity on a transmitting side may retransmit, based on the RLC status report, the data packet that fails to be transmitted.

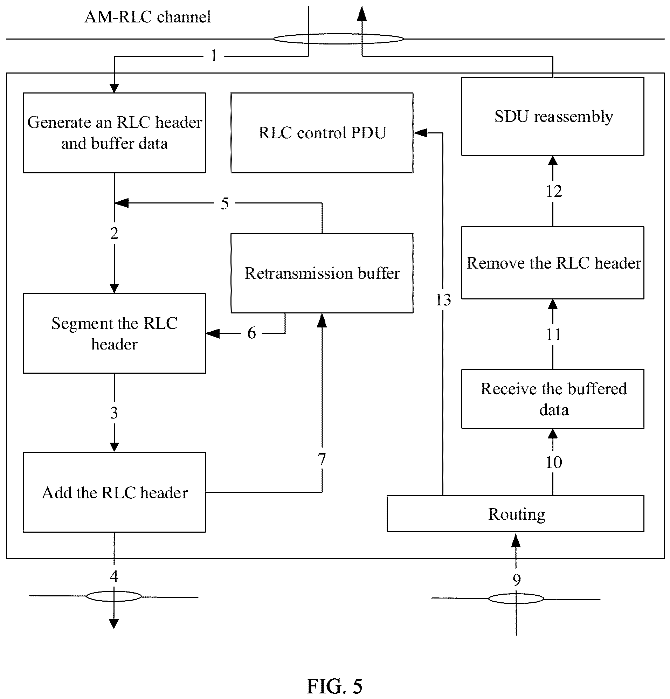

FIG. 5 is a schematic flowchart of ARQ mechanism-based data transmission according to an embodiment of this application. In FIG. 5, a number on an arrow may indicate a data transmission sequence. For example, a smaller number indicates a higher execution priority. As shown in FIG. 5, after receiving an SDU from an upper layer, an AM RLC entity on a transmitting side first generates an RLC header and buffers data, and performs transmission or performs segmentation before transmission based on a resource size provided by a lower layer, that is, adds the RLC header to the RLC SDU or a segment in the RLC SDU (RLC SDU segment) based on the resource size from the lower layer, to generate an RLC PDU, and then transmits the RLC PDU to the lower layer. After transmitting an RLC PDU, the AM RLC entity on the AM transmitting-side puts the data packet into a retransmission buffer. If the AM RLC entity on the transmitting side receives an RLC status report sent by an AM RLC entity on a receiving side, and the RLC status report indicates that there is an RLC SDU or an RLC SDU segment that fails to be received, the AM RLC entity on the transmitting side retransmits the RLC SDU or the RLC SDU segment stored in the buffer. After receiving the buffered RLC PDU from a lower layer through routing, the AM RLC entity on the receiving side first removes the RLC header, then reassembles the SDU, and delivers the SDU to an upper layer in sequence.

A condition that needs to be met for the AM RLC entity on the receiving side to send the RLC status report may include the following condition 1 and/or condition 2:
Condition 1: The AM RLC entity on the receiving side receives an RLC PDU, where the RLC PDU includes a polling (polling) bit.
Condition 2: A reassembly timer (or a reassembly timer, for example, t-Reassembly) maintained by the AM RLC entity on the receiving side expires. An RLC entity maintains a reassembly timer to detect a packet loss at the lower layer. After an RLC PDU is received, if there is a gap in a receive window on a receiving side and the reassembly timer is not running, the reassembly timer is started. For example, if SNs of received data packets are equal to {1, 2, 3, 5, 6}, an SN of an unreceived data packet is equal to 4. If the reassembly timer is not running in this case, the reassembly timer is started. If the reassembly timer is run and does not expire, no new reassembly timer is started.

A status report sent by the AM RLC entity on the receiving side indicates a receiving status of an RLC SDU or an RLC SDU segment. For example, a data packet corresponding to NACK information indicates that the data packet is not successfully received or fails to be received. After receiving the RLC status report fed back by the peer RLC entity, the AM RLC entity on the transmitting side retransmits, based on NACK information in the status report, a data packet that is not successfully received by the receiving side or an unsuccessfully received segment in the data packet.

A network device sets a maximum quantity of retransmissions (for example, maxRetxThreshold) for the AM RLC entity on the transmitting side. For retransmission of an RLC SDU, the transmitting side performs retransmission based on the maximum quantity of retransmissions. For example, if a quantity of retransmissions of an RLC SDU reaches maxRetxThreshold, an RRC layer is indicated that the maximum quantity of retransmissions is reached. Further, the RRC layer triggers radio link failure, and further triggers an RRC reestablishment process.

### (4) Related variables and definitions on an RLC receiving side

(a) RX_NEXT: This variable may be used as a lower boundary of an RLC receive window, and indicates a next SN value of an RLC SDU successfully received by an RLC layer in sequence. For example, if RLC SDUs whose SNs are equal to {1, 2, 3, 6} have been received, an SN of the RLC SDU successfully received by the RLC layer in sequence is equal to 3, that is, RX_NEXT=4. Even if an RLC SDU whose SN is equal to 5 is successfully received, RX_NEXT is still equal to 4 provided that an RLC SDU whose SN is equal to 4 is not successfully received.
(b) Next to-be-received sequence number variable of a highest received sequence number on the receiving side, for example, RX_Next_Highest: This variable indicates a next SN value of a largest SN of an RLC SDU successfully received by an RLC layer. For example, if RLC SDUs whose SNs are equal to {1, 2, 3, 6} have been received, the largest SN of the RLC SDU successfully received by the RLC layer is 6, and RX_Next_Highest=7.
(c) RX_Highest_Status: This variable indicates a largest SN that can be indicated as ACK SN when an RLC status report needs to be generated. ACK_SN is a next unsuccessfully received SN that is not indicated as lost in an RLC STATUS PDU. That is, an RLC SDU corresponding to ACK_SN is not successfully received, and it is not determined whether a transmitting side sends the RLC SDU. For example, if RLC SDUs whose SNs are equal to {1, 2, 3, 6} have been received, none of RLC SDUs whose SNs follow an SN that is equal to 7 are successfully received, and it is not determined whether the transmitting side sends these RLC SDUs, and RX_Highest_Status=7.
(d) RX_Next_Status_Trigger: This variable records a next SN value of an RLC SDU that triggers t-Reassembly.

When an RLC status report is triggered and a timer status prohibit (t-StatusProhibit) timer is not running, if a MAC layer indicates a transmission opportunity to an RLC layer, the RLC layer generates an RLC STATUS PDU. The transmission opportunity may include that there is an available time-frequency resource, and the like. For an RLC SDU that meets RX_Next≤SN<RX_Highest_Status and that is not completely received, starting from a first RLC SDU that is not completely received in sequence, an AM RLC entity on a receiving side indicates information about an unsuccessfully received RLC SDU or RLC SDU segment in ascending order of SNs, until a size that is indicated by the MAC layer and that is of an RLC PDU that can be generated is filled.

The following describes, based on four cases of the unsuccessfully received RLC SDU or RLC SDU segment, content that may be included in the RLC status report.

Case 1: If one RLC SDU is completely not successfully received, the status report includes NACK_SN, and NACK_SN is set to an SN corresponding to the RLC SDU.

Case 2: If one RLC SDU segment is not successfully received, the status report includes NACK_SN, SOstart, and SOend. NACK_SN is set to a NACK SN of the RLC SDU, SOstart is a relative location of a first byte of the unreceived segment in the original RLC SDU, and SOend is a relative location of a last byte of the segment in the original RLC SDU.

Case 3: If a group of consecutive RLC SDUs is not successfully received, the status report includes NACK_SN and a NACK range. NACK_SN indicates an SN corresponding to a first unsuccessfully received RLC SDU. The NACK range indicates a quantity of RLC SDUs that are consecutively lost starting from the RLC SDU corresponding to NACK_SN. If a group of consecutive RLC SDUs is not successfully received and an RLC SDU segment is not received before or after this group, the status report may further include SOstart and SOend in addition to NACK_SN and a NACK range.

Case 4: If it is determined that an RLC SDU is not received, but it is not determined whether a transmitting side sends the RLC SDU, the status report includes ACK_SN. ACK_SN is an SN corresponding to a next unsuccessfully received RLC SDU that is not indicated as lost in the generated status report.

### (5) Receiving-related variables and definitions at a PDCP layer

(a) RX_NEXT: This variable indicates a next count (COUNT) value expected to be received, with an initial value of 0.
(b) RX_DELIV: This variable is a lower boundary of a receive window, and indicates a COUNT value associated with a first SDU that has not been delivered to an upper layer, with an initial value of 0.
(c) RX_REORD: The variable is a COUNT value corresponding to a PDCP data PDU for which a t-Reordering timer is started in a receive window.

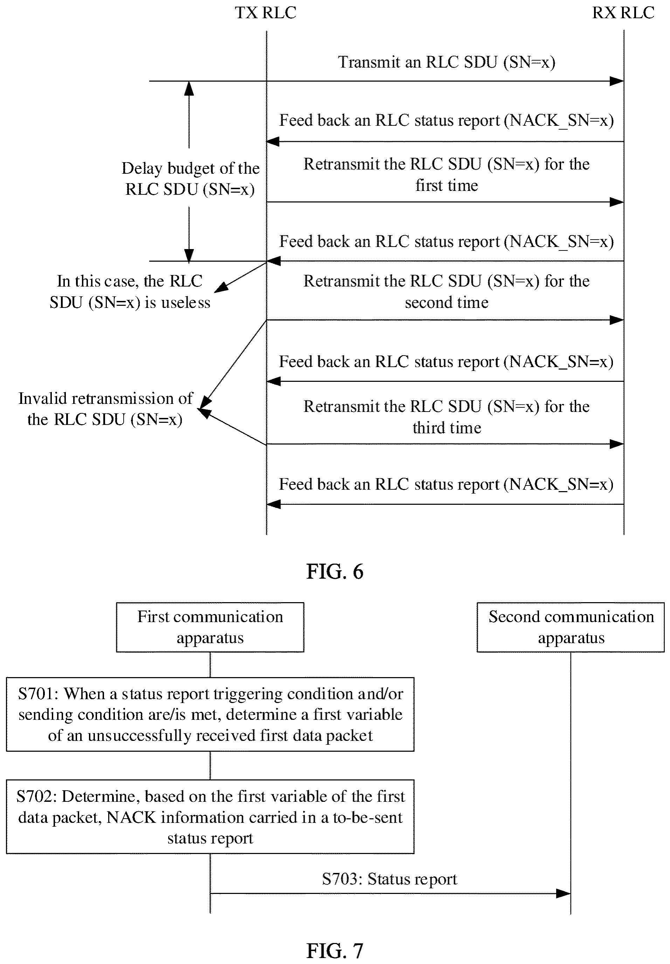

After the RLC entity uses the ARQ mechanism in the AM mode for transmission, if quality of a lower-layer transmission link is poor, a data packet may not be received and needs to be retransmitted. FIG. 6 is a schematic flowchart of ARQ mechanism-based data retransmission according to the conventional technology. In FIG. 6, a transmitting side is a TX RLC, and a receiving side is an RX RLC. A data packet is an RLC SDU, an SN of the data packet is equal to x, and the data packet is retransmitted three times. As shown in FIG. 6, a delay budget of the RLC SDU whose SN is equal to x is reached when an RLC status report is received again after a first retransmission. In this case, the data packet expires and is useless. However, the data packet is still not successfully received by the receiving side, and an AM RLC entity on the transmitting side continues to retransmit the unreceived data packet, for example, a second retransmission and a third retransmission. These retransmissions may be understood as invalid retransmissions. These invalid retransmissions occupy transmission resources of other data packets. This causes a resource waste and an increase in a delay of the other data packets.

Based on this, this application provides a communication method. A receiving side controls, based on a value relationship between a first variable of a data packet and a first threshold, whether a feedback status report includes NACK information of the data packet, so that a transmitting side retransmits a data packet or an unsuccessfully received segment in a data packet for which NACK information is fed back in the status report. This can avoid transmission of data that expires, and improve data transmission effectiveness.

The communication method provided in embodiments of this application may be applied to various communication scenarios, for example, enhanced mobile broadband (enhanced mobile broadband, eMBB), URLLC, machine type communication (machine type communication, MTC), massive machine type communications (massive machine type communications, mMTC), enhanced machine type communication (enhanced machine type communication, eMTC), IoT, NB-IoT, CPE, augmented reality (augmented reality, AR), virtual reality (virtual reality, VR), D2D, and V2X.

The terminal device in embodiments of this application may be the terminal device in the network architecture shown in FIG. 1 or FIG. 4. In embodiments of this application, a function performed by the terminal device may be performed by an apparatus (for example, a chip, a chip system, or a circuit) in the terminal device, or by an apparatus that can be used together with the terminal device. The network device in embodiments of this application may be the network device in the network architecture shown in FIG. 1 or FIG. 4. In embodiments of this application, a function performed by the network device may be performed by an apparatus (for example, a chip, a chip system, or a circuit) in the network device, or by an apparatus that can be used together with the network device.

This application is applicable to an AM mode, or is applicable to a new mode, for example, an HM mode. This is not limited herein.

FIG. 7 is a diagram of interaction in a communication method according to an embodiment of this application. The communication method includes but is not limited to the following steps S701 to S703.

Step S701: When a status report triggering condition and/or sending condition are/is met, a first communication apparatus determines a first variable of an unsuccessfully received first data packet.

The first communication apparatus may serve as a receiving side of a second communication apparatus, and the second communication apparatus may serve as a transmitting side of the first communication apparatus. In other words, the first communication apparatus may be briefly referred to as a receiving side, and the second communication apparatus may be briefly referred to as a transmitting side. A data packet sent by the transmitting side to the receiving side includes at least the first data packet, in other words, the second communication apparatus sends at least the first data packet to the first communication apparatus.

The first communication apparatus and the second communication apparatus may be terminal devices or network devices. When the first communication apparatus is a terminal device, the second communication apparatus may be a network device. Alternatively, when the first communication apparatus is a network device, the second communication apparatus may be a terminal device. Alternatively, when the first communication apparatus is a terminal device, the second communication apparatus may be another terminal device. In other words, the communication method shown in FIG. 7 is applicable to uplink communication, downlink communication, or sidelink communication.

Optionally, each of the first communication apparatus and the second communication apparatus may be an RLC entity of a terminal device or an RLC entity of a network device. For example, when the first communication apparatus is an RLC entity of a terminal device, the second communication apparatus may be an RLC entity of a terminal device or an RLC entity of a network device. When the first communication apparatus is an RLC entity of a network device, the second communication apparatus may be an RLC entity of a terminal device. Correspondingly, a status report is an RLC status report, and the first data packet is an RLC SDU or an RLC SDU segment.

The status report triggering condition and sending condition and content of the status report are not limited in this application. The triggering condition may include the foregoing descriptions of the condition 1 and the condition 2. Details are not described herein again. The sending condition may be that there is a triggered RLC status report, t-StatusProhibit is not running, a MAC layer indicates a transmission opportunity to an RLC layer, and the RLC layer needs to generate an RLC status report. For the status report, refer to the foregoing descriptions of the content of the status report reported based on the case of the unsuccessfully received RLC SDU or RLC SDU segment. Details are not described herein again.

In this embodiment of this application, the first data packet is an unsuccessfully received data packet. The first variable of the first data packet indicates a quantity of times the first communication apparatus feeds back NACK information of the first data packet. The first variable is, for example, denoted as feedback_Count. A first threshold is, for example, denoted as maxFeedbackThreshold, and is used to limit a quantity of times the first communication apparatus feeds back NACK information for an unsuccessfully received data packet, for example, a maximum value of a quantity of feedback times of the NACK information of the data packet. That is, when the first variable of the first data packet is less than the first threshold, the first communication apparatus may feed back the NACK information of the first data packet by using the status report, so that after receiving the status report, the second communication apparatus may retransmit the first data packet or an unsuccessfully received segment in the first data packet; or when the first variable of the first data packet is greater than or equal to the first threshold, the first communication apparatus may no longer feed back the NACK information of the first data packet, and a status report that is fed back subsequently does not include the NACK information of the first data packet, so that after receiving the status report, the second communication apparatus no longer retransmits the first data packet and an unsuccessfully received segment in the first data packet.

Alternatively, in some other feasible examples, when the first variable of the first data packet is less than or equal to the first threshold, the first communication apparatus may feed back the NACK information of the first data packet by using the status report, so that after receiving the status report, the second communication apparatus may retransmit the first data packet or an unsuccessfully received segment in the first data packet; or when the first variable of the first data packet is greater than the first threshold, the first communication apparatus may no longer feed back the NACK information of the first data packet, and a status report that is fed back subsequently does not include the NACK information of the first data packet, so that after receiving the status report, the second communication apparatus no longer retransmits the first data packet and an unsuccessfully received segment in the first data packet.

When the first communication apparatus is a terminal device, and the second communication apparatus is a network device, the network device may configure the first threshold for the terminal device on a uu interface. When the first communication apparatus and the second communication apparatus are different terminal devices, on a sidelink interface, a network device or a terminal device (for example, the second communication apparatus) on a transmitting side may configure the first threshold for a terminal device (for example, the first communication apparatus) on a receiving side, or a terminal device on a receiving side may independently determine the first threshold. When the first communication apparatus is a network device, and the network device uses a CU-DU split framework, a CU may determine a first threshold on a DU. The first threshold may be configured for the DU by using an F1 application (application, AP) message (for example, a UE CONTEXT SETUP REQUEST message or a UE CONTEXT MODIFICATION REQUEST message).

A method for determining the first variable of the first data packet and a value of the first variable are not limited in this application. Initializing the first variable of the first data packet means to set the first variable of the first data packet to an initial value. The initial value of the first variable may be 0. For example, feedback_Count=0. Alternatively, the initial value of the first variable may be 1 or the like. The first variable may be obtained by using a counter by collecting statistics on whether a sent status report and/or a to-be-sent status report include/includes the NACK information of the first data packet, or whether a received data packet includes the first data packet, or the like.

Optionally, if a first condition is met, the first communication apparatus initializes the first variable of the first data packet, where the first condition includes that the NACK information of the first data packet has not been fed back; or if a second condition is met, the first communication apparatus increases the first variable of the first data packet by 1, where the second condition includes that the NACK information of the first data packet has been fed back.

In this embodiment of this application, the NACK information of the first data packet may be fed back by using the status report, to indicate an unsuccessfully received data packet and/or a successfully received data packet. For example, a sequence number of the unsuccessfully received data packet may be determined based on NACK_SN, or a sequence number of the unsuccessfully received data packet may be determined based on NACK_SN and a NACK range. Alternatively, a data packet that is an unsuccessfully received data packet and for which it is not determined whether sending is performed may be determined based on ACK_SN, and then the successfully received data packet may be determined. For NACK_SN, the NACK range, and ACK_SN, refer to the foregoing descriptions. Details are not described herein again.

Before a status report is generated, it needs to be determined whether a data packet and a segment in the data packet are successfully received. The following uses the first data packet as an example for description. If the first data packet is successfully received or all segments in the first data packet are successfully received, the status report does not include the NACK information of the first data packet or NACK information of the segment in the first data packet. If the first data packet is not successfully received or at least one segment in the first data packet is not successfully received, the status report may include the NACK information of the first data packet or NACK information of the segment in the first data packet. The NACK information may indicate a sequence number of the first data packet. Optionally, the NACK information included in the status report may include at least one of fields such as NACK_SN, a NACK range, SOstart, SOend, and ACK_SN.

A method for determining NACK information including a data packet based on the status report may be specifically: determining a sequence number of an unsuccessfully received data packet based on the NACK_SN field in the status report, or determining a sequence number of an unsuccessfully received data packet based on the NACK_SN and NACK range fields, or determining, based on the ACK_SN field, a data packet that is an unsuccessfully received data packet and for which it is not determined whether sending is performed, or the like.

Further, an unsuccessfully received segment in the first data packet may be determined based on SOstart and SOend in the status report. After it is determined that the sequence number of the unsuccessfully received data packet does not include the sequence number of the first data packet, it may be determined that the sequence number of the unsuccessfully received data packet does not include the sequence number of the first data packet, and therefore it is determined that the status report does not include the NACK information of the first data packet.

It may be understood that when the status report triggering condition and/or sending condition are/is met, for the unsuccessfully received first data packet, if the NACK information of the first data packet has been fed back in a previously sent status report, the first communication apparatus may increase the first variable of the first data packet by 1, for example, feedback_Count+1. Otherwise, if the NACK information of the first data packet has not been fed back in a previously sent status report, the first communication apparatus may initialize the first variable of the first data packet. In this way, the first communication apparatus can determine, based on a relationship between a value of a first variable of a data packet and the first threshold, whether to feed back NACK information of the data packet in a to-be-generated status report. Further, the second communication apparatus may determine, based on whether the received status report includes the NACK information of the data packet, whether to retransmit the corresponding data packet. This helps avoid transmission of data that expires, and can improve data transmission effectiveness.

Optionally, the first condition further includes that the to-be-generated status report is capable of including the NACK information of the first data packet or NACK information of a segment in the first data packet; and the second condition further includes that the to-be-generated status report is capable of including the NACK information of the first data packet or NACK information of a segment in the first data packet.

Because a size of data to be sent in the status report is limited by an allocated time-frequency resource, if there are insufficient time-frequency resources, some NACK information possibly cannot be put into the status report. In consideration of this case, after the first variable of the first data packet is determined, in addition to determining whether a condition for feeding back the NACK information of the first data packet is met, it needs to be further determined whether the to-be-generated status report is capable of including the NACK information of the first data packet or the NACK information of the segment in the first data packet. That is, when the NACK information of the first data packet has been fed back, and the to-be-generated status report is capable of including the NACK information of the first data packet or the NACK information of the segment in the first data packet, the first variable of the first data packet may be increased by 1, for example, feedback_Count+1. When the NACK information of the first data packet has not been fed back, and the to-be-generated status report is capable of including the NACK information of the first data packet or the NACK information of the segment in the first data packet, the first variable of the first data packet may be initialized, for example, feedback_Count=0 or 1. In this way, accuracy of determining the first variable can be further improved.

Optionally, if the second condition is met, and the first variable of the first data packet is less than the first threshold, the first communication apparatus increases the first variable of the first data packet by 1. That is, before increasing the first variable of the first data packet by 1, the first communication apparatus may first determine whether the second condition is met, and determine whether the first variable of the first data packet is less than the first threshold. If the first variable of the first data packet is less than the first threshold, the first communication apparatus considers that the first data packet or the segment in the first data packet is not successfully received, needs to feed back the NACK information to enable the second communication apparatus to perform retransmission, and increases the first variable of the first data packet by 1. If the first variable of the first data packet is greater than or equal to the first threshold, the first communication apparatus considers that a maximum quantity of feedback times is reached for the first data packet, and the first data packet no longer needs to be retransmitted, and therefore there is no need to include the NACK information of the first data packet in the status report.

Alternatively, optionally, when determining that the second condition is met, the first communication apparatus first increases the first variable of the first data packet by 1, and then the first communication apparatus determines a value relationship between the first variable of the first data packet and the first threshold. For example, when the first variable of the first data packet is less than the first threshold, or the first variable of the first data packet is less than or equal to the first threshold, the first communication apparatus may use the status report to carry the NACK information of the first data packet; or when the first variable of the first data packet is greater than or equal to the first threshold, or the first variable of the first data packet is greater than the first threshold, the first communication apparatus may consider that a maximum quantity of feedback times is exceeded for the first data packet, and may no longer retransmit the first data packet, so that the status report does not include the NACK information of the first data packet. It may be understood that when the first threshold is fixed, compared with a case in which the first variable is first increased by 1 and then it is determined whether the first variable is less than the first variable, in a case in which a value of the first variable is first determined and then the first variable that is less than the first threshold is increased by 1, the NACK information may be transmitted for one more time, and therefore data may be transmitted for one more time. This helps improve a communication success rate.

It should be noted that the foregoing conditions for initializing and increasing the first variable by 1 are merely examples. Actually, another case or a combined use case may be further included. For example, the first condition includes that the NACK information of the first data packet has not been fed back, and the status report is capable of including the NACK information of the first data packet or NACK information of a segment in the first data packet; and the second condition includes that the NACK information of the first data packet has been fed back, the first variable of the first data packet is less than the first threshold, and the status report is capable of including the NACK information of the first data packet or NACK information of a segment in the first data packet.

Step S702: The first communication apparatus determines, based on the first variable of the first data packet, NACK information carried in a to-be-sent status report.

For example, if the first variable of the first data packet is less than the first threshold, the status report includes the NACK information of the first data packet; or if the first variable of the first data packet is greater than or equal to the first threshold, the status report does not include the NACK information of the first data packet; or if the first variable of the first data packet is less than or equal to the first threshold, the status report includes the NACK information of the first data packet; or if the first variable of the first data packet is greater than the first threshold, the status report does not include the NACK information of the first data packet.

Optionally, in another implementation of step 701 and step 702, the action and the determining conditions in the foregoing solution are replaced as follows: "Increasing the first variable by 1" is replaced with "decreasing the first variable by 1", "greater than" or "greater than or equal to" is replaced with "less than" or "less than or equal to", "less than" or "less than or equal to" is replaced with "greater than" or "greater than or equal to", and other parts are kept unchanged. In this case, the first variable is used to record a quantity of times NACK information is further allowed to be fed back for a data packet, and the first threshold is used to limit a quantity of times the first communication apparatus feeds back NACK information for an unsuccessfully received data packet, for example, may be set to 0. In an example, if the first variable of the data packet is initialized to 2, it indicates that the NACK information is allowed to be fed back for a maximum of two times. Each time the NACK information of the data packet is fed back by using a status report, the first variable is decreased by 1, and when the first variable is decreased to 0, the NACK information is no longer fed back for the data packet.

For example, a combination of the operation on the first variable, the first condition, and the second condition in step 701 is as follows: If the first condition is met, the first communication apparatus initializes the first variable of the first data packet, so that the first variable of the first data packet is set to an initial value; or if the second condition is met, the first communication apparatus decreases the first variable of the first data packet by 1.

The first condition includes that the NACK information of the first data packet has not been fed back; and the second condition includes that the NACK information of the first data packet has been fed back, and the first variable of the first data packet is greater than or equal to the first threshold. Alternatively, the first condition includes that the NACK information of the first data packet has not been fed back, and the status report is capable of including the NACK information of the first data packet or NACK information of a segment in the first data packet; and the second condition includes that the NACK information of the first data packet has been fed back, the first variable of the first data packet is greater than or equal to the first threshold, and the status report is capable of including the NACK information of the first data packet or NACK information of a segment in the first data packet. In step 702, if the first variable of the first data packet is greater than the first threshold, the status report includes the NACK information of the first data packet; or if the first variable of the first data packet is less than or equal to the first threshold, the status report does not include the NACK information of the first data packet; or if the first variable of the first data packet is greater than or equal to the first threshold, the status report includes the NACK information of the first data packet; or if the first variable of the first data packet is less than the first threshold, the status report does not include the NACK information of the first data packet.

Step S703: The first communication apparatus sends the status report to the second communication apparatus. Correspondingly, the second communication apparatus receives the status report from the first communication apparatus.

Optionally, after step S703, the method may further include: The second communication apparatus retransmits an unsuccessfully received data packet or data segment based on the NACK information in the status report. For example, if the status report includes the NACK information of the first data packet, it is determined that the first variable of the first data packet is less than the first threshold, and the first data packet or the unsuccessfully received segment in the first data packet is retransmitted to the first communication apparatus; or if the status report includes the NACK information of the first data packet, it is determined that the first variable of the first data packet is less than or equal to the first threshold, and the first data packet or the unsuccessfully received segment in the first data packet is retransmitted to the first communication apparatus.

The first data packet may be buffered in the second communication apparatus (for example, an RLC entity on a transmitting side). If it is determined that a sequence number corresponding to the NACK information in the status report includes the sequence number of the buffered first data packet, the second communication apparatus determines that the status report includes the NACK information of the first data packet. When the status report includes the buffered first data packet, the second communication apparatus may send the first data packet or the unsuccessfully received segment in the first data packet to the first communication apparatus again.

Optionally, the communication method may further include: If a quantity of retransmissions of the first data packet is equal to a second threshold, the second communication apparatus discards the first data packet. The second threshold may be a maximum retransmission threshold, for example, maxRetxThreshold. The quantity of retransmissions may be the first variable, or may be a quantity of times the second communication apparatus retransmits a data packet. The second threshold is used to limit a quantity of retransmissions of an unsuccessfully received data packet, and may be understood as a maximum value of a quantity of retransmissions of a data packet. The second threshold may be equal to or unequal to the first threshold. For example, the second threshold is greater than the first threshold. When the quantity of retransmissions of the first data packet is equal to the second threshold, the first data packet is discarded, so that transmission of a data packet for which a quantity of retransmissions is exceeded can be avoided.

Optionally, if the second communication apparatus is a terminal device, the network device may not configure the quantity of retransmissions for the second communication apparatus. The terminal device may determine, based on a quantity of retransmissions of a data packet and a quantity of feedback times of NACK information, whether to retransmit the data packet or an unsuccessfully received segment in the data packet.

In the communication method shown in FIG. 7, when the status report triggering condition and/or sending condition are/is met, the first communication apparatus may first determine a first variable of an unsuccessfully received data packet; then determine, based on the first variable of the data packet, whether to use a to-be-sent status report to carry NACK information; and then send the status report to the second communication apparatus. In this way, the first communication apparatus controls, based on a value relationship between a first variable of a data packet and the first threshold, whether a feedback status report includes NACK information of the data packet, so that the second communication apparatus retransmits a data packet or an unsuccessfully received segment in a data packet for which NACK information is fed back in the status report. This can avoid transmission of data that expires, and improve data transmission effectiveness.

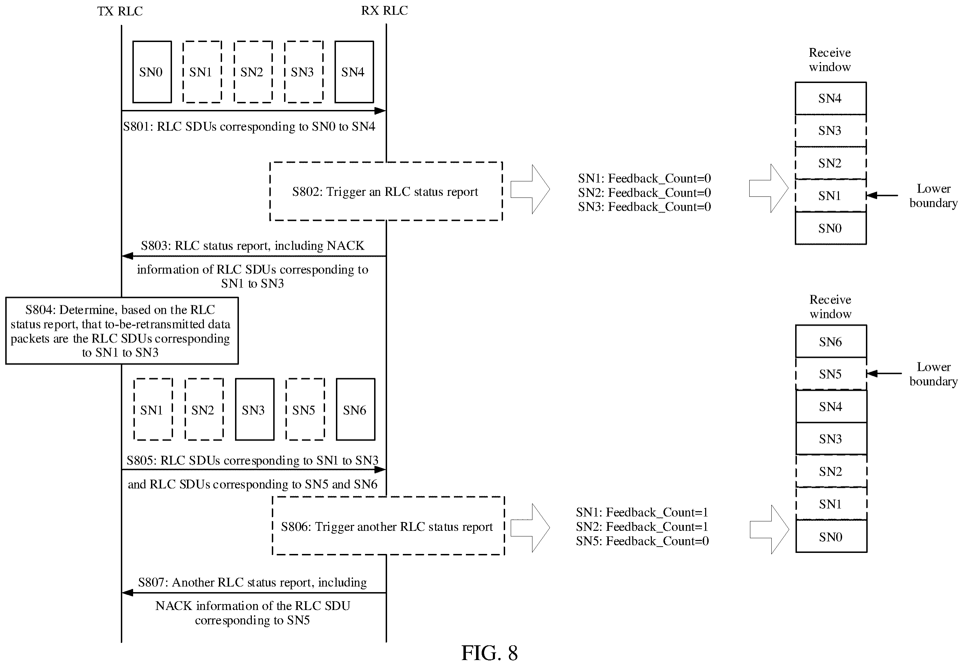

The following uses an example in which the second communication apparatus is a TX RLC, the first communication apparatus is an RX RLC, the data packet is an RLC SDU, and the status report is an RLC STATUS PDU for description. FIG. 8 is a diagram of a scenario of a communication method according to an embodiment of this application. In FIG. 8, the first threshold is 1, a successfully received data packet is indicated by using a solid line box, and an unsuccessfully received data packet is indicated by using a dashed line box. As shown in FIG. 8, the method may include steps S801 to S807.

Step S801: The TX RLC sends RLC SDUs corresponding to SN0 to SN4 to the RX RLC.

The RLC SDU corresponding to SN0 and the RLC SDU corresponding to SN4 are successfully received by the RX RLC, but RLC SDUs corresponding to SN1 to SN3 are not successfully received.

Step S802: The RX RLC triggers an RLC status report, and initializes first variables (feedback_Count) of the RLC SDUs corresponding to SN1 to SN3.

For example, the first variables of the RLC SDUs corresponding to SN1 to SN3 are separately set to feedback_Count=0, and the first variables of the three RLC SDUs are all less than the first threshold. In some other examples, the first variables may be initialized to 1.

Step S803: The RX RLC sends the RLC status report to the TX RLC entity, where the RLC status report includes NACK information of the RLC SDUs corresponding to SN1 to SN3.

The NACK information herein may be indicated by using NACK_SN corresponding to SN1 to SN3, to indicate that the RLC SDUs corresponding to SN1 to SN3 are not successfully received. In some feasible examples, step S802 is an optional step, and is performed when a status report triggering condition is met. When a status report sending condition is met, the RX RLC performs the step of initializing the first variables of the RLC SDUs corresponding to SN1 to SN3, and generates a to-be-sent RLC status report, so that the RX RLC performs step S803.

Step S804: The TX RLC determines, based on the RLC status report, that to-be-retransmitted data packets are the RLC SDUs corresponding to SN1 to SN3.

Step S805: The TX RLC sends the RLC SDUs corresponding to SN1 to SN3 and the RLC SDUs corresponding to SN5 and SN6 to the RX RLC.

In other words, when the retransmitted data packets are the RLC SDUs corresponding to SN1 to SN3, the RLC SDUs corresponding to SN5 and SN6 are newly transmitted. In this case, the RX RLC successfully receives the RLC SDUs corresponding to SN3 and SN6, and the RLC SDUs corresponding to SN1, SN2, and SN5 are not successfully received.

Step S806: The RX RLC triggers another RLC status report, and initializes a first variable of the RLC SDU corresponding to SN5.

For example, the first variable of the RLC SDU corresponding to SN5 is set to feedback_Count=0, and the first variables of the RLC SDUs corresponding to SN1 and SN2 are increased by 1.

In this transmission, the first variables of the RLC SDUs corresponding to SN1 and SN2 are 1 and are equal to the first threshold. The RLC SDUs corresponding to SN1 and SN2 may no longer be retransmitted. The status report does not include NACK information of the two data packets, but includes NACK information of a data packet whose first variable is less than the first threshold, namely, NACK information of the RLC SDU corresponding to SN5. Step S806 may be described with reference to the descriptions of step S802, and is an optional step.

Step S807: The RX RLC sends the another RLC status report to the TX RLC, where the RLC status report includes the NACK information of the RLC SDU corresponding to SN5.

The NACK information herein may be indicated by using NACK_SN corresponding to SN5, to indicate that the RLC SDU corresponding to SN5 is not successfully received. Then, the RLC SDU corresponding to SN5 may be sent. However, this is not shown in FIG. 8.

Optionally, the communication method may further include: If the first data packet or the segment in the first data packet is received, and the first variable of the first data packet is greater than or equal to the first threshold, the first communication apparatus discards the received first data packet or the received segment in the first data packet. That is, when the first variable of the first data packet is greater than or equal to the first threshold, the first data packet is discarded even if the first data packet or the segment in the first data packet is not previously successfully received, so that the received first data packet or the received segment in the first data packet is discarded, to avoid continued processing and delivery of a data packet that expires.

Optionally, the communication method may further include: The first communication apparatus updates a receiving-side variable.

When the first communication apparatus serves as a receiving side of the second communication apparatus, and the first communication apparatus is an RLC entity, the receiving-side variable of the first communication apparatus may include RX_Next, RX_Highest_Status, and RX_Next_Status_Trigger, and may further include RX_Next_Highest described above and the like. For the receiving-side variable, refer to the foregoing descriptions. Details are not described herein again. It may be understood that the receiving-side variable is updated, so that a data packet that expires can be filtered out. This helps improve data transmission effectiveness.

A method for updating the receiving-side variable is not limited in this application. The receiving-side variable may be updated based on the NACK information fed back for the data packet, and then a receive window may be updated. Optionally, if the first variable of the first data packet is greater than or equal to the first threshold, and the sequence number of the first data packet is equal to RX_NEXT, the first communication apparatus updates RX_NEXT to a next unsuccessfully received sequence number whose first variable is less than the first threshold. In other words, when the first variable of the first data packet is greater than or equal to the first threshold, and the sequence number of the first data packet is equal to RX_NEXT, the first communication apparatus may update RX_NEXT to an SN of a next unsuccessfully received data packet for which a maximum quantity of NACK feedback times is not reached. RX_NEXT is used as a lower boundary value of a receive window, and RX_NEXT is updated, so that a minimum value of a sequence number of a to-be-received data packet is increased. This helps avoid transmission of data that expires, and can improve data transmission effectiveness.

For example, as shown in FIG. 8, when unsuccessfully received data packets indicated in the RLC status report are the RLC SDUs corresponding to SN1 to SN3, the RX RLC may update a first value in a receiving-side variable to a minimum sequence number, namely, 1, of the unsuccessfully received data packet, so that a lower boundary value of a receive window is set to 1. When an unsuccessfully received data packet indicated in the RLC status report is the RLC SDU corresponding to SN5, the RX RLC may update a first value in a receiving-side variable to a minimum sequence number, namely, 5, of the unsuccessfully received data packet, so that a lower boundary value of a receive window is set to 5.

Optionally, if the first variable of the first data packet is greater than or equal to the first threshold, and the sequence number of the first data packet is equal to RX_Highest_Status, the first communication apparatus updates RX_Highest_Status to a next unsuccessfully received sequence number whose first variable is less than the first threshold. In other words, when the first variable of the first data packet is greater than or equal to the first threshold, and the sequence number of the first data packet is equal to RX_Highest_Status, the first communication apparatus may update RX_Highest_Status to an SN of a next unsuccessfully received data packet for which a maximum quantity of NACK feedback times is not reached. RX_Highest_Status is updated, so that a value of ACK_SN indicated in a to-be-generated RLC STATUS PDU can be increased. This can avoid a data loss.

Optionally, if a retransmission timer expires, the first communication apparatus updates RX_Highest_Status to a value that is greater than or equal to RX_Next_Status_Trigger and greater than or equal to a sequence number of an unsuccessfully received data packet whose first variable is less than the first threshold. In this way, if the retransmission timer expires, the first communication apparatus triggers uploading of the status report. In this case, RX_Highest_Status may be updated to a maximum value between RX_Next_Status_Trigger and a value that is greater than or equal to the sequence number of the unsuccessfully received data packet whose first variable is less than the first threshold, so that a value of ACK_SN indicated in a to-be-generated RLC STATUS PDU is increased. This can avoid a data loss.

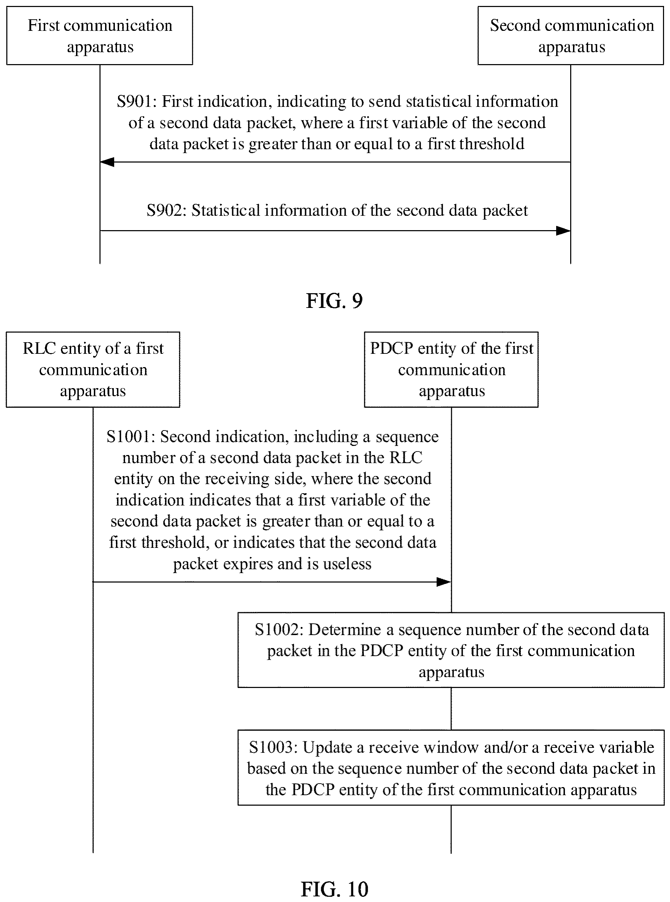

Consistent with the embodiment shown in FIG. 7, FIG. 9 is a diagram of interaction in another communication method according to an embodiment of this application. The communication method includes but is not limited to the following steps S901 and S902. Step S902 may be performed after step S701. In the communication method shown in FIG. 9, a second communication apparatus is a network device or a part of a network device. For example, if a terminal device serves as a receiving side of a network device, and the network device serves as a transmitting side of the terminal device, a first communication apparatus may be a terminal device, and the second communication apparatus is a network device. Further, the first communication apparatus may be an RLC entity of a terminal device, and the second communication apparatus may be an RLC entity of a network device. Alternatively, if a terminal device serves as a transmitting side of a network device, the network device serves as a receiving side of the terminal device, and the network device uses a CU-DU split architecture, the first communication apparatus may be a DU of the network device, and the second communication apparatus may be a CU of the network device.

Step S901: The second communication apparatus sends a first indication to the first communication apparatus. Correspondingly, the first communication apparatus receives the first indication from the second communication apparatus. The first indication indicates to send statistical information of a second data packet, and a first variable of the second data packet is greater than or equal to a first threshold.

In this embodiment of this application, an unsuccessfully received data packet may be referred to as a first data packet, and a first data packet whose first variable is greater than the first threshold may be referred to as a second data packet, or a first data packet whose first variable is greater than or equal to the first threshold may be referred to as a second data packet. For a method for determining the first variable of the second data packet, refer to the descriptions of determining the first variable of the first data packet in step S702. Details are not described herein again. The statistical information of the second data packet may include a quantity, a proportion value, and the like of second data packets. The proportion value may include a ratio of the quantity of second data packets to a quantity of data packets sent by the second communication apparatus, or may include a ratio of the quantity of second data packets to a sum of the quantity of second data packets and a quantity of successfully received data packets, or the like.

Optionally, the statistical information of the second data packet is a proportion value in a preset time period. In this case, when the second data packet is an RLC SDU, the statistical information of the second data packet may also be referred to as a proportion value of an RLC SDU that expires. The preset time period may be preconfigured by the second communication apparatus, or may be indicated in the first indication.

Step S902: The first communication apparatus sends the statistical information of the second data packet to the second communication apparatus. Correspondingly, the second communication apparatus receives the statistical information of the second data packet from the first communication apparatus.

A triggering condition of step S902 is not limited in this application, and the following three reporting manners may be included.

Reporting manner 1: The first communication apparatus periodically performs step S902.

A reporting period for performing step S902 by the first communication apparatus is not limited in this application. The reporting period may be a fixed time length, or may be configured by the second communication apparatus or another network device. For example, the second communication apparatus may use the first indication to carry a first time threshold, and the first indication indicates to periodically report the statistical information of the second data packet based on the first time threshold. In other words, the first time threshold is used as the reporting period, and after receiving the first indication, the first communication apparatus reports the statistical information of the second data packet at an interval of the first time threshold. The statistical information of the second data packet is periodically reported, so that the second communication apparatus can periodically determine a data receiving status, and then determine whether to adjust a time-frequency resource. This can improve accuracy of time-frequency resource allocation, and help improve communication quality.

Reporting manner 2: When a reporting condition is met, step S902 is performed.

The reporting condition may be carried in the first indication, and the first indication indicates to send the statistical information of the second data packet when the reporting condition is met. The reporting condition is not limited in this application either. It may be understood that the statistical information of the second data packet is reported when the reporting condition is met. This can save time-frequency resources occupied for reporting, and help improve reporting effectiveness. Optionally, the reporting condition includes a second time threshold and a proportion threshold, and the proportion value of the second data packet is greater than or equal to the proportion threshold within the second time threshold. The second time threshold herein may be the same as or different from the first time threshold. This is not limited in this application. In this way, when the proportion value of the second data packet is greater than or equal to the proportion threshold within the second time threshold, the first communication apparatus sends the proportion value of the second data packet to the second communication apparatus. That is, it is determined, based on time and the proportion value, whether to report the statistical information of the second data packet. This can improve reporting effectiveness.

Reporting manner 3: After the first indication is received, step S902 is performed. In this way, after sending the first indication to the first communication apparatus, the second communication apparatus may receive the statistical information of the second data packet from the first communication apparatus. This can improve reporting timeliness.

It should be noted that the foregoing three reporting manners are merely examples. Actually, another reporting manner may be further included to perform step S902.

In the communication method shown in FIG. 9, after receiving the first indication from the second communication apparatus, the first communication apparatus may report the statistical information of the second data packet to the second communication apparatus, so that the network device configures or adjusts a time-frequency resource based on the statistical information. This can improve accuracy of time-frequency resource allocation, and help improve communication quality.

A method for configuring or adjusting the time-frequency resource by the network device based on the statistical information is not limited in this application. For example, if the first communication apparatus reports an excessively high proportion value of RLC SDUs that expire in a time period, the network device may increase a scheduling priority of the radio bearer, to more quickly schedule a radio transmission resource for data on the bearer, or schedule a more robust transmission resource (for example, use a lower-order modulation and coding scheme (modulation and coding scheme, MCS) or a time-domain repetition (repetition) mechanism), so as to ensure data transmission reliability and reduce the proportion of the RLC SDUs that expire.

FIG. 10 is a diagram of interaction in still another communication method according to an embodiment of this application. In the communication method shown in FIG. 10, for a first communication apparatus and a second communication apparatus, refer to the descriptions in FIG. 7. Details are not described herein again. The communication method includes but is not limited to the following steps S1001 to S1003.

Step S1001: An RLC entity of the first communication apparatus sends a second indication to a PDCP entity of the first communication apparatus. Correspondingly, the PDCP entity of the first communication apparatus receives the second indication from the RLC entity of the first communication apparatus. The second indication includes a sequence number of a second data packet in the RLC entity of the first communication apparatus, and the second indication indicates that a first variable of the second data packet is greater than or equal to a first threshold, or indicates that the second data packet expires and is useless.

Alternatively, the second indication indicates that a first variable of the second data packet is greater than a first threshold. For a method for determining the first variable of the second data packet, refer to the descriptions of determining the first variable of the first data packet in step S701. Details are not described herein again. It may be understood that when the first variable of the second data packet is greater than or equal to the first threshold, or when the first variable of the second data packet is greater than the first threshold, or when the second data packet expires and is useless, the RLC entity of the first communication apparatus and the PDCP entity of the first communication apparatus may no longer wait to receive the second data packet. This reduces a delay in continued data packet processing, and can improve data transmission efficiency and effectiveness.

Step S1002: The PDCP entity of the first communication apparatus determines a sequence number of the second data packet in the PDCP entity of the first communication apparatus.

In this embodiment of this application, a sequence number in an RLC entity may be briefly referred to as an RLC SN, and a sequence number in a PDCP entity may be briefly referred to as a PDCP SN. The PDCP SN and the RLC SN are not in a one-to-one mapping relationship. This may be due to the following three items.
(1) There is no PDCP SN in a PDCP control protocol data unit (PDCP control protocol data unit, PDCP control PDU) generated by the PDCP entity, but the RLC entity needs to be allocated in the RLC entity.
(2) For a split bearer (split bearer), a PDCP entity of the second communication apparatus may transmit a split data packet to a plurality of associated RLC entities, but the PDCP entity does not have a fixed splitting behavior.
(3) The RLC SN is reset due to RLC reestablishment.

Therefore, to identify a data packet for which there is no need to wait in the PDCP entity, the sequence number of the second data packet in the PDCP entity of the first communication apparatus needs to be determined. To identify the sequence number of the second data packet in the PDCP entity of the first communication apparatus, a DRB that carries the second data packet may be processed. The following steps are included: A DRB of the second communication apparatus processes and transmits a PDCP control PDU; and the RLC entity of the first communication apparatus transmits a PDCP SDU and a third indication to the PDCP entity of the first communication apparatus.

A method for processing the PDCP control PDU is not limited in this application, and the following three processing manners may be included.

Processing manner 1: A PDCP entity of the DRB of the second communication apparatus is associated with a first RLC entity and a second RLC entity, the first RLC entity processes and transmits the PDCP control PDU, and the second RLC entity processes and transmits a PDCP data PDU (PDCP data PDU).

For a structural relationship between the PDCP entity and both the first RLC entity and the second RLC entity, refer to the descriptions in FIG. 3. Details are not described herein again. It may be understood that when a PDCP control PDU that carries no SN and a PDCP data PDU that carries an SN are processed and transmitted through different RLC entities, the PDCP entity of the first communication apparatus may separately obtain the PDCP control PDU that carries no SN and the PDCP data PDU that carries an SN, and further determine an SN of the PDCP data PDU in the PDCP entity of the first communication apparatus. This improves efficiency of determining a sequence number of a data packet at a PDPC layer.

Processing manner 2: A PDCP control PDU generated by a PDCP entity of the DRB of the second communication apparatus is transmitted through another DRB.

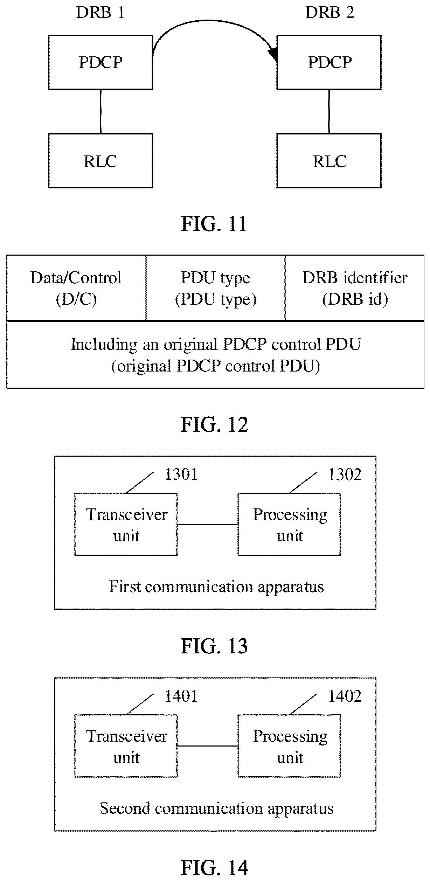

FIG. 11 is a diagram of transmitting a PDCP control PDU according to an embodiment of this application. In FIG. 11, a DRB 1 is a source DRB used by the PDPC entity of the second communication apparatus to transmit data, and a DRB 2 is another DRB. As shown in FIG. 11, a PDCP entity of the DRB 1 transmits a generated PDCP control PDU through a PDCP of the DRB 2, so that the another DRB transmits a PDCP control PDU whose sequence number does not need to be determined.

The another DRB encapsulates a PDCP control PDU delivered by the source DRB into a new data format. For the data format, refer to FIG. 12. As shown in FIG. 12, a data/control (data/control, D/C) field indicated in the new format of the PDCP control PDU may include a PDU type (PDU type) and a DRB identifier (DRB identifier, DRB id), and indicate that the encapsulated PDCP control PDU includes an original PDCP control PDU (original PDCP control PDU).

A PDCP data PDU may be transmitted through the source DRB, so that the PDCP entity of the first communication apparatus may separately obtain, through different DRBs, a PDCP control PDU that carries no SN and a PDCP data PDU that carries an SN, and further determine an SN of the PDCP data PDU in the PDCP entity of the first communication apparatus. This improves efficiency of determining a sequence number of a data packet at a PDPC layer.

Processing manner 3: A PDCP control PDU generated by a PDCP entity of the DRB of the second communication apparatus is transferred to an RLC entity, the RLC entity encapsulates the PDCP control PDU into an RLC control PDU for processing and transmission, and the RLC entity does not need to allocate an RLC SN to the PDCP control PDU during processing.

When a PDCP layer transmits the PDCP control PDU to an RLC layer, additional indication information may be carried, to indicate that a data type of the delivered data packet is a PDCP control PDU and the data packet needs to be encapsulated into an RLC control PDU in another format. The RLC entity of the second communication apparatus does not need to allocate an RLC SDU to the RLC control PDU into which the PDCP control PDU is encapsulated, in other words, the RLC control PDU carries no RLC SN.

It should be noted that the foregoing three processing manners are merely examples of processing the PDCP control PDU. Actually, there may be further another processing manner for processing the PDCP control PDU.

In this embodiment of this application, the third indication indicates an RLC SDU corresponding to the PDCP SDU. The PDCP entity of the first communication apparatus can maintain a correspondence between an SN of a data packet in the RLC and an SN of the data packet in the PDCP. The RLC entity of the first communication apparatus may determine, by using the second indication, an RLC SN of an RLC SDU for which there is no need to wait for receiving, and then a sequence number of the RLC SDU in the PDCP entity of the first communication apparatus and a corresponding PDCP SDU may be determined.

Optionally, when an RLC entity is established or reestablished, a first RLC SDU sent by the RLC entity to the PDCP entity carries a corresponding RLC SN; and the PDCP entity maintains a correspondence between an SN in the RLC and an SN in the PDCP based on an RLC SDU and an RLC SN of a corresponding data packet.

Step S1003: The PDCP entity of the first communication apparatus updates a receive window and/or a receive variable based on the sequence number of the second data packet in the PDCP entity of the first communication apparatus.

For the receive window and the receive variable of the PDCP entity, refer to the foregoing descriptions. Details are not described herein again. Optionally, if the sequence number of the second data packet in the PDCP entity of the first communication apparatus is equal to RX_DELIV, RX_DELIV is updated to a COUNT value corresponding to a next PDCP SDU that is not delivered to an upper layer, so that RX_DELIV is updated, to avoid unnecessary reordering and waiting for a subsequently arrived data packet at the PDCP layer.

In the communication method shown in FIG. 10, if the RLC entity of the first communication apparatus determines that the first variable of the second data packet is greater than or equal to the first threshold, the second indication may be sent to the PDCP entity of the first communication apparatus, so that the PDCP entity of the first communication apparatus may determine the sequence number, in the RLC entity, of the second data packet for which there is no need to wait for receiving. After determining the sequence number of the second data packet in the PDCP entity of the first communication apparatus, the PDCP entity of the first communication apparatus may update the receive window and/or the receive variable of the PDCP entity, to avoid unnecessary reordering and waiting for a subsequently arrived data packet at the PDCP layer. This reduces a delay in continued data packet processing, and can improve data transmission efficiency and effectiveness.

In some other feasible examples, with reference to FIG. 3, the first RLC entity and the second RLC entity that are associated with the PDCP entity send same content, so that coordinated multi-station transmission can be implemented, thereby improving communication reliability.

In some other feasible examples, with reference to FIG. 4, to implement consistency of data content sent in a coordinated manner, transmission may be performed through the first network device 103 and the second network device 104, or data transmission may be performed in a PDCP splitting manner. In the splitting manner shown in FIG. 4, after being processed by a PDCP, data on a bearer of the first network device 103 is further copied. The copied data is distributed to the second network device 104 through an inter-station interaction link, and an RLC layer of the second network device 104 may continue to perform sending and processing. Specifically, for data on a bearer, after processing by the PDCP of the first network device 103 is completed, the RLC-a of the first network device 103 and the RLC of the second network device 104 continue to perform processing. The RLC-b of the first network device 103 controls and sends control information, namely, an RLC control PDU (for example, an RLC status report), related to the bearer. For processing by a MAC layer of the first network device 103, content from the RLC-a and content from the RLC-b need to be separately assembled into packets, for example, assembled into different TBs. A TB obtained by assembling the content from the RLC-a and a TB obtained through assembly by a MAC of the second network device 104 may be transmitted in a coordinated manner. In this case, content of the TBs obtained through assembly by the two stations is consistent. The first network device 103 independently transmits a TB including the content from the RLC-b, and does not perform coordinated transmission.

Optionally, for the PDCP control PDU, the manner in FIG. 3 may be used. A PDCP control PDU generated by the first network device 103 is processed by an RLC-b of a gNB 1. In this case, the PDCP control PDU does not need to be copied and distributed to a gNB 2, that is, no coordinated transmission needs to be performed, but is independently transmitted by the first network device 103.

In the splitting manner in FIG. 4, content that needs to be transmitted in a coordinated manner is processed through the RLC-a, and content that needs to be independently transmitted is processed through the RLC-b. This ensures that a plurality of stations that perform coordination can obtain same TB content through assembly, and ensures reliability of coordinated transmission. The following describes, by using a specific example, a splitting process that can be implemented in FIG. 4. An AM transmission process is used as an example. It should be understood that this may be further extended to an HM transmission process.

First, a downlink example is described. The data bearer may be denoted as a DRB 1. After processing by the PDCP, 10 data packets, namely, a PDCP PDU #1 to a PDCP PDU #10, are obtained. The first network device 103 copies and distributes the 10 data packets to the second network device 104. The RLC of the second network device 104 and the RLC-a of the first network device 103 continue to complete processing of a sending process, and generate RLC PDUs, namely, an RLC PDU #1 to an RLC PDU #10, at the RLC layer. If an RLC layer of the terminal device 101 successfully receives data packets whose sequence numbers are 1 to 4 and 6 to 10, after an RLC status report is triggered, the terminal device 101 sends the RLC status report to the first network device 103, and feeds back information indicating that the RLC PDU #5 is not successfully received. The RLC-b of the first network device 103 processes the status report, and independently retransmits the RLC PDU #5. Optionally, the RLC-b of the first network device 103 may send content of the received RLC status report to the second network device 104 through an inter-station backhaul link, so that the RLC of the second network device 104 performs send window push processing.

An uplink example is as follows: Uplink data of the terminal device 101 is sent to the first network device 103, and downlink data is sent by the first network device 103 and the second network device 104 in a coordinated manner. When the first network device 103 needs to send an RLC status report for uplink transmission, the RLC-b of the first network device 103 generates the RLC status report, and submits the RLC status report to the MAC for packet assembly, and the first network device 103 performs independent transmission.

The foregoing describes in detail the method in embodiments of this application, and the following provides an apparatus in embodiments of this application.

FIG. 13 is a diagram of a structure of a first communication apparatus according to an embodiment of this application. As shown in FIG. 13, the first communication apparatus may include a transceiver unit 1301 and a processing unit 1302. The transceiver unit 1301 may be a signal input (receiving) or output (sending) apparatus, and is configured to perform signal transmission with another device or another component in the device.

The processing unit 1302 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control an apparatus (for example, a donor node, a relay node, or a chip), execute a software program, and process data of the software program.

The first communication apparatus may include a terminal device or a network device. When the first communication apparatus is a terminal device, a second communication apparatus may be a network device or another terminal device. Alternatively, when the first communication apparatus is a network device, a second communication apparatus may be a terminal device.

In the first communication apparatus shown in FIG. 13, the transceiver unit 1301 is configured to: when a status report triggering condition and/or sending condition are/is met, send a status report to the second communication apparatus. If a first variable of a first data packet is less than a first threshold, the status report includes NACK information of the first data packet; or if a first variable of a first data packet is greater than or equal to a first threshold, the status report does not include NACK information of the first data packet. The first data packet is an unsuccessfully received data packet, and the first variable of the first data packet indicates a quantity of feedback times of the NACK information of the first data packet.

In some feasible examples, the processing unit 1302 is configured to: if a first condition is met, initialize the first variable of the first data packet, where the first condition includes that the NACK information of the first data packet has not been fed back; or if a second condition is met, increase the first variable of the first data packet by 1, where the second condition includes that the NACK information of the first data packet has been fed back.

In some feasible examples, the first condition further includes that the status report is capable of including the NACK information of the first data packet or NACK information of a segment in the first data packet; and the second condition further includes that the status report is capable of including the NACK information of the first data packet or NACK information of a segment in the first data packet.

In some feasible examples, the processing unit 1302 is further configured to: if the second condition is met, and the first variable of the first data packet is less than the first threshold, increase the first variable of the first data packet by 1.

In some feasible examples, the first communication apparatus serves as a receiving side of the second communication apparatus, and the processing unit 1302 is further configured to update a receiving-side variable.

In some feasible examples, the receiving-side variable includes RX_NEXT; and the processing unit 1302 is specifically configured to: if the first variable of the first data packet is greater than or equal to the first threshold, and a sequence number of the first data packet is equal to RX_NEXT, update RX_NEXT to a sequence number of a next unsuccessfully received data packet whose first variable is less than the first threshold.

Alternatively, in some feasible examples, the receiving-side variable includes RX_Highest_Status; and the processing unit 1302 is specifically configured to: if the first variable of the first data packet is greater than or equal to the first threshold, and a sequence number of the first data packet is equal to RX_Highest_Status, update RX_Highest_Status to a sequence number of a next unsuccessfully received data packet whose first variable is less than the first threshold.

Alternatively, in some feasible examples, the receiving-side variable includes RX_Highest_Status and RX_Next_Status_Trigger; and the processing unit 1302 is specifically configured to: if a reassembly timer expires, update RX_Highest_Status to a value that is greater than or equal to RX_Next_Status_Trigger and greater than or equal to a sequence number of an unsuccessfully received data packet whose first variable is less than the first threshold.

In some feasible examples, the processing unit 1302 is configured to: if the first data packet or the segment in the first data packet is received, and the first variable of the first data packet is greater than or equal to the first threshold, discard the received first data packet or the received segment in the first data packet.

In some feasible examples, the NACK information of the first data packet indicates the sequence number of the first data packet.

For implementation of the transceiver unit 1301 and the processing unit 1302, refer to the related descriptions of the method embodiment shown in FIG. 7, FIG. 9, or FIG. 10. Details are not described herein again.

FIG. 14 is a diagram of a structure of a second communication apparatus according to an embodiment of this application. As shown in FIG. 14, the second communication apparatus may include a transceiver unit 1401 and a processing unit 1402. For the transceiver unit 1401, the processing unit 1402, a first communication apparatus, and the second communication apparatus, refer to the descriptions in FIG. 13. Details are not described herein again.

In the second communication apparatus shown in FIG. 14, the transceiver unit 1301 is configured to receive a status report from the first communication apparatus; and the processing unit is configured to: if the status report includes NACK information of a first data packet, determine that a first variable of the first data packet is less than a first threshold, and retransmit the first data packet or an unsuccessfully received segment in the first data packet to the first communication apparatus, where the first data packet is an unsuccessfully received data packet, and the first variable of the first data packet indicates a quantity of feedback times of the NACK information of the first data packet.

In some feasible examples, the processing unit is further configured to: if a quantity of retransmissions of the first data packet is equal to a second threshold, discard the first data packet.

For implementation of the transceiver unit 1401 and the processing unit 1402, refer to the related descriptions of the method embodiment shown in FIG. 7, FIG. 9, or FIG. 10. Details are not described herein again.

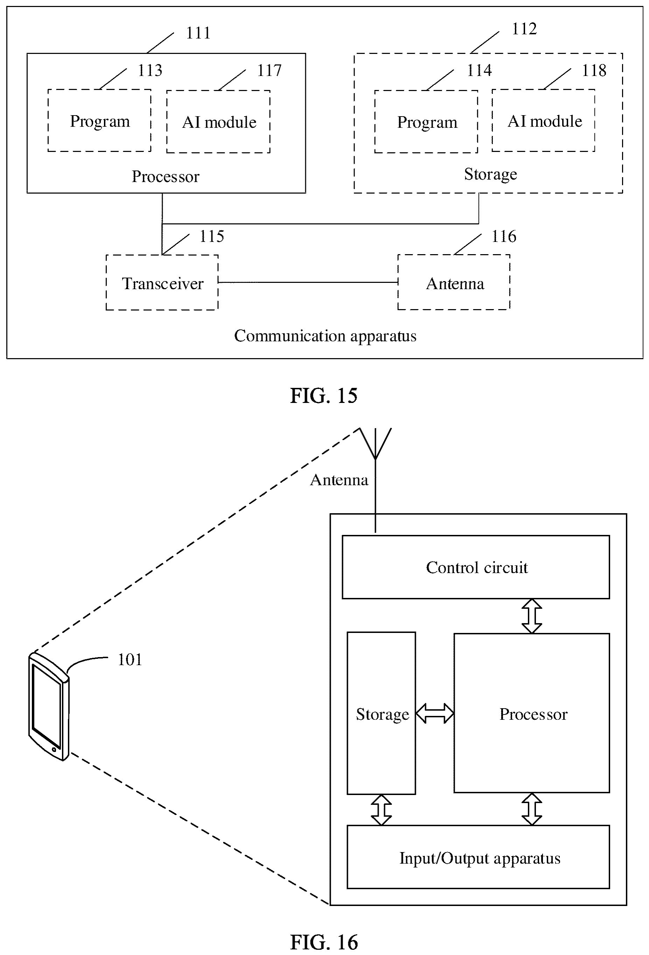

FIG. 15 is a diagram of a structure of a communication apparatus according to an embodiment of this application. It may be understood that the communication apparatus includes forms such as modules, units, elements, circuits, or interfaces, which are appropriately configured together to execute the solutions. The communication apparatus may be a RAN node, a terminal, a core network device, or another network device, or may be a component (for example, a chip) in these devices, and is configured to implement the method described in the method embodiments.

As shown in FIG. 15, the communication apparatus may include one or more processors 111. The processor 111 may also be referred to as a processing unit, and can implement a specific control function. The processor 111 may be a general-purpose processor, a dedicated processor, or the like. For example, the processor 111 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 111 may include a program 113 (which may also be sometimes referred to as code or instructions), and the program 113 may be run on the processor 111, to enable the communication apparatus to perform the method described in the method embodiments.

In another optional design, the processor 111 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication apparatus may include a circuit, and the circuit may implement the sending, receiving, or communication function in the foregoing method embodiments.

Optionally, the communication apparatus may include one or more storages 112, and the storage 112 stores a program 114 (which may also be sometimes referred to as code or instructions). The program 114 may be run on the processor 111, to enable the communication apparatus to perform the method described in the method embodiments.

Optionally, the processor 111 may include an AI module 117, and/or the storage 112 may include an AI module 118. The AI module is configured to implement an Al-related function. The AI module may be implemented by software, hardware, or a combination of software and hardware. For example, the AI module may include an RIC module. For another example, the AI module may be a near-real-time RIC or a non-real-time RIC.

Optionally, the processor 111 and/or the storage 112 may further store data. The processor and the storage may be separately disposed, or may be integrated together. For example, the correspondence described in the foregoing method embodiments may be stored in the storage or stored in the processor.

Optionally, the communication apparatus may further include a transceiver 115 and/or an antenna 116. The processor 111 may also be sometimes referred to as a processing unit, and controls a communication apparatus (for example, a RAN node or a terminal). The transceiver 115 may also be sometimes referred to as a transceiver unit, a transceiver machine, a transceiver circuit, a transceiver, or the like, and is configured to implement a transceiver function of the communication apparatus through the antenna 116.

Optionally, the communication apparatus may be configured to perform any method described in FIG. 7, FIG. 9, or FIG. 10 in embodiments of this application.

In an embodiment, the communication apparatus may be a first communication apparatus. When computer program instructions stored in the storage 112 are executed, the processor 111 is configured to perform an operation performed by the processing unit 1302 in the foregoing embodiment, the transceiver 115 is configured to perform an operation performed by the transceiver unit 1301 in the foregoing embodiment, and the transceiver 115 is further configured to send information to another communication apparatus than the communication apparatus. The first communication apparatus may be further configured to perform any method performed by the first communication apparatus in the method embodiment in FIG. 7, FIG. 9, or FIG. 10. Details are not described herein again.

In an embodiment, the communication apparatus may be a second communication apparatus. When computer program instructions stored in the storage 112 are executed, the processor 111 is configured to control the transceiver 115 to perform an operation performed by the processing unit 1402 in the foregoing embodiment, the transceiver 115 is configured to perform an operation performed by the transceiver unit 1401 in the foregoing embodiment, and the transceiver 115 is further configured to receive information from another communication apparatus than the communication apparatus. The second communication apparatus may be further configured to perform any method performed by the second communication apparatus in the method embodiment in FIG. 7, FIG. 9, or FIG. 10. Details are not described herein again.

The processor and the transceiver described in this application may be implemented on an integrated circuit (integrated circuit, IC), an analog IC, a radio frequency integrated circuit (radio frequency interface chip, RFIC), a mixed-signal IC, an application-specific integrated circuit (application-specific integrated circuit, ASIC), a printed circuit board (printed circuit board, PCB), an electronic device, or the like. The processor and the transceiver may be manufactured by using various IC process technologies, for example, a complementary metal oxide semiconductor (complementary metal oxide semiconductor, CMOS), an N-channel metal oxide semiconductor (N-channel metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiments may be a terminal device or a network device. However, a scope of the apparatus described in this application is not limited thereto, and a structure of the communication apparatus may not be limited by FIG. 15. The apparatus may be an independent device, or may be a part of a larger device. For example, the communication apparatus may be:
(1) an independent integrated circuit IC, a chip, a chip system, or a subsystem;
(2) a set including one or more ICs, where optionally, the IC set may include a storage component configured to store data and/or instructions;
(3) an ASIC, for example, a modem (MSM);
(4) a module that can be built into another device; or
(5) the terminal device or the network device above.

FIG. 16 is a diagram of a structure of a terminal device according to an embodiment of this application. For ease of description, FIG. 16 shows only main components of the terminal device. As shown in FIG. 16, the terminal device 101 includes a processor, a storage, a control circuit, an antenna, and an input/output apparatus. The processor is mainly configured to: process a communication protocol and communication data, control the entire terminal device, execute a software program, and process data of the software program. The storage is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data entered by a user, and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and then outputs a baseband signal to the radio frequency circuit. The radio frequency circuit processes the baseband signal to obtain a radio frequency signal, and then sends the radio frequency signal to the outside in a form of an electromagnetic wave through the antenna. When data is to be sent to the terminal device, the radio frequency circuit receives a radio frequency signal through the antenna. The radio frequency signal is further converted into a baseband signal, and the baseband signal is output to the processor. The processor converts the baseband signal into data, and processes the data.

For ease of description, FIG. 16 shows only one storage and one processor. In an actual terminal device, there may be a plurality of processors and storages. The storage may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 16 integrates functions of the baseband processor and the central processing unit. Persons skilled in the art may understand that the baseband processor and the central processing unit may be processors independent of each other, and are interconnected by using a technology, for example, a bus. Persons skilled in the art may understand that the terminal device may include a plurality of baseband processors to adapt to different network standards, the terminal device may include a plurality of central processing units to enhance a processing capability of the terminal device, and components of the terminal device may be connected by using various buses. The baseband processor may also be described as a baseband processing circuit or a baseband processing chip. The central processing unit may also be described as a central processing circuit or a central processing chip. A function of processing the communication protocol and the communication data may be embedded into the processor, or may be stored in the storage unit in a form of a software program, and the processor executes the software program to implement a baseband processing function.

In an example, the antenna and the control circuit having a transceiver function may be considered as a transceiver unit of the terminal device 101, and the processor having a processing function may be considered as a processing unit of the terminal device 101. The transceiver unit may also be referred to as a transceiver, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. For example, the receiving unit may also be referred to as a receiver machine, a receiver, a receiver circuit, or the like, and the sending unit may also be referred to as a transmitter machine, a transmitter, a transmitter circuit, or the like. Optionally, the receiving unit and the sending unit may be one integrated unit, or may be a plurality of independent units. The receiving unit and the sending unit may be at one geographical location, or may be distributed at a plurality of geographical locations.

In an embodiment, the transceiver unit is configured to perform an operation performed by the transceiver unit 1301 or the transceiver unit 1401 in the foregoing embodiment, and the processing unit is configured to perform an operation performed by the processing unit 1302 or the processing unit 1402 in the foregoing embodiment. The terminal device 101 may be further configured to perform any method performed in FIG. 7, FIG. 9, or FIG. 10. Details are not described herein again.

An embodiment of this application further provides a computer-readable storage medium. The computer-readable storage medium stores a computer program. When the program is executed by a processor, a procedure related to the first communication apparatus in the communication method provided in the foregoing method embodiments may be implemented.

An embodiment of this application further provides another computer-readable storage medium. The another computer-readable storage medium stores a computer program. When the program is executed by a processor, a procedure related to the second communication apparatus in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When each component module of the foregoing device is implemented in a form of a software functional unit and sold or used as an independent product, the component module may be stored in a computer-readable storage medium.

An embodiment of this application further provides a chip system, including at least one processor and a communication interface. The communication interface and the at least one processor are interconnected through a line. The at least one processor is configured to run a computer program or instructions, to perform some or all of the steps described in the method embodiment in FIG. 7, FIG. 9, or FIG. 10. The chip system may include a chip, or may include a chip and another discrete component.

An embodiment of this application further provides a communication system. The system includes a first communication apparatus and a second communication apparatus. For detailed descriptions, refer to any communication method shown in FIG. 7, FIG. 9, or FIG. 10.

It should be understood that the storage in embodiments of this application may be a volatile memory or a non-volatile memory, or may include a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The storage is any other medium that can be configured to carry or store expected program code in a form of an instruction structure or a data structure and that can be accessed by a computer. However, this is not limited thereto. The storage in embodiments of this application may alternatively be a circuit or any other apparatus that can implement a storage function, and is configured to store program instructions and/or data.

It should be further understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the storage (a storage module) is integrated into the processor.

It should be noted that the storage described in this specification is intended to include but is not limited to these storages and any storage of another appropriate type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Persons of ordinary skill in the art may be aware that the units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the technologies, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

The steps of the method in embodiments of this application may be sequentially adjusted, combined, or removed based on an actual requirement. Steps in each embodiment may be partially performed (for example, the terminal device may not perform the steps performed by the terminal device in the foregoing embodiments). An execution sequence of different steps can be changed. Embodiments described in this specification may be combined with other embodiments, different embodiments may be combined with each other, and different steps in different embodiments in this specification may be combined.

The modules/units in the apparatus in embodiments of this application may be combined, divided, and removed based on an actual requirement.

An "embodiment" in this specification means that a specific feature, structure, or characteristic described with reference to the embodiment may be included in at least one embodiment of this application. The phrase appearing at various locations in this specification neither necessarily means a same embodiment, nor means an independent or optional embodiment exclusive from another embodiment.

Terms "first", "second", "third", "fourth", and the like (if any) in embodiments of this application are used to distinguish between similar objects, and are not necessarily used to describe a specific sequence or order.

In embodiments of this application, "include" may indicate an inclusion relationship or an equal relationship. For example, if A includes B, A may include other content in addition to B, or A and B are same content.

In the descriptions of this application, unless otherwise specified, "/" indicates an "or" relationship between associated objects. For example, A/B may indicate A or B. In this application, "and/or" merely describes an association relationship between associated objects and indicates that three relationships may exist. For example, A and/or B may indicate three cases: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof means any combination of these items, including a singular item (piece) or any combination of a plurality of items (pieces). For example, at least one (piece) of a, b, or c may indicate a, b, c, a and b, a and c, b and c, or a, b, and c, where a, b, and c may be singular or plural.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. A communication method, applied to a first communication apparatus, and comprising:
when a status report triggering condition and/or sending condition are/is met, sending a status report to a second communication apparatus, wherein
if a first variable of a first data packet is less than a first threshold, the status report comprises negative acknowledgement NACK information of the first data packet; or if a first variable of a first data packet is greater than or equal to a first threshold, the status report does not comprise NACK information of the first data packet, wherein the first data packet is an unsuccessfully received data packet, and the first variable of the first data packet indicates a quantity of feedback times of the NACK information of the first data packet.

2. The method according to claim 1, wherein the method further comprises:
if a first condition is met, initializing the first variable of the first data packet, wherein the first condition comprises that the NACK information of the first data packet has not been fed back; or
if a second condition is met, increasing the first variable of the first data packet by 1, wherein the second condition comprises that the NACK information of the first data packet has been fed back.

3. The method according to claim 2, wherein the first condition further comprises that the status report is capable of comprising the NACK information of the first data packet or NACK information of a segment in the first data packet; and
the second condition further comprises that the status report is capable of comprising the NACK information of the first data packet or NACK information of a segment in the first data packet.

4. The method according to claim 2 or 3, wherein the method further comprises:
if the second condition is met, and the first variable of the first data packet is less than the first threshold, increasing the first variable of the first data packet by 1.

5. The method according to any one of claims 1 to 4, wherein the first communication apparatus serves as a receiving side of the second communication apparatus, and the method further comprises:
updating a receiving-side variable.

6. The method according to claim 5, wherein the receiving-side variable comprises at least one of the following: a receiving-side next to-be-received sequence number variable, a receiving-side highest status variable, and a receiving-side next status trigger variable; and
updating the receiving-side variable comprises:
if the first variable of the first data packet is greater than or equal to the first threshold, and a sequence number of the first data packet is equal to the receiving-side next to-be-received sequence number variable, updating the receiving-side next to-be-received sequence number variable to a sequence number of a next unsuccessfully received data packet whose first variable is less than the first threshold; or
if the first variable of the first data packet is greater than or equal to the first threshold, and a sequence number of the first data packet is equal to the receiving-side highest status variable, updating the receiving-side highest status variable to a sequence number of a next unsuccessfully received data packet whose first variable is less than the first threshold; or
if a reassembly timer expires, updating the receiving-side highest status variable to a value that is greater than or equal to the receiving-side next status trigger variable and greater than or equal to a sequence number of an unsuccessfully received data packet whose first variable is less than the first threshold.

7. The method according to any one of claims 1 to 6, wherein the method further comprises:
if the first data packet or the segment in the first data packet is received, and the first variable of the first data packet is greater than or equal to the first threshold, discarding the received first data packet or the received segment in the first data packet.

8. The method according to any one of claims 1 to 7, wherein the NACK information of the first data packet indicates the sequence number of the first data packet.

9. A communication method, applied to a second communication apparatus, and comprising:
receiving a status report from a first communication apparatus; and
if the status report comprises negative acknowledgement NACK information of a first data packet, determining that a first variable of the first data packet is less than a first threshold, and retransmitting the first data packet or an unsuccessfully received segment in the first data packet to the first communication apparatus, wherein
the first data packet is an unsuccessfully received data packet, and the first variable of the first data packet indicates a quantity of feedback times of the NACK information of the first data packet.

10. The method according to claim 9, wherein the method further comprises:
if a quantity of retransmissions of the first data packet is equal to a second threshold, discarding the first data packet.

11. A first communication apparatus, comprising:
a transceiver unit, configured to: when a status report triggering condition and/or sending condition are/is met, send a status report to a second communication apparatus, wherein
if a first variable of a first data packet is less than a first threshold, the status report comprises negative acknowledgement NACK information of the first data packet; or if a first variable of a first data packet is greater than or equal to a first threshold, the status report does not comprise NACK information of the first data packet, wherein the first data packet is an unsuccessfully received data packet, and the first variable of the first data packet indicates a quantity of feedback times of the NACK information of the first data packet.

12. The apparatus according to claim 11, wherein the apparatus further comprises:
a processing unit, configured to: if a first condition is met, initialize the first variable of the first data packet, wherein the first condition comprises that the NACK information of the first data packet has not been fed back; or if a second condition is met, increase the first variable of the first data packet by 1, wherein the second condition comprises that the NACK information of the first data packet has been fed back.

13. The apparatus according to claim 12, wherein the first condition further comprises that the status report is capable of comprising the NACK information of the first data packet or NACK information of a segment in the first data packet; and
the second condition further comprises that the status report is capable of comprising the NACK information of the first data packet or NACK information of a segment in the first data packet.

14. The apparatus according to claim 12 or 13, wherein the processing unit is further configured to: if the second condition is met, and the first variable of the first data packet is less than the first threshold, increase the first variable of the first data packet by 1.

15. The apparatus according to any one of claims 12 to 14, wherein the first communication apparatus serves as a receiving side of the second communication apparatus, and the processing unit is further configured to update a receiving-side variable.

16. The apparatus according to claim 15, wherein the receiving-side variable comprises at least one of the following: a receiving-side next to-be-received sequence number variable, a receiving-side highest status variable, and a receiving-side next status trigger variable; and
the processing unit is specifically configured to: if the first variable of the first data packet is greater than or equal to the first threshold, and a sequence number of the first data packet is equal to the receiving-side next to-be-received sequence number variable, update the receiving-side next to-be-received sequence number variable to a sequence number of a next unsuccessfully received data packet whose first variable is less than the first threshold; or if the first variable of the first data packet is greater than or equal to the first threshold, and a sequence number of the first data packet is equal to the receiving-side highest status variable, update the receiving-side highest status variable to a sequence number of a next unsuccessfully received data packet whose first variable is less than the first threshold; or if a reassembly timer expires, update the receiving-side highest status variable to a value that is greater than or equal to the receiving-side next status trigger variable and greater than or equal to a sequence number of an unsuccessfully received data packet whose first variable is less than the first threshold.

17. The apparatus according to any one of claims 12 to 16, wherein the processing unit is further configured to: if the first data packet or the segment in the first data packet is received, and the first variable of the first data packet is greater than or equal to the first threshold, discard the received first data packet or the received segment in the first data packet.

18. The apparatus according to any one of claims 11 to 17, wherein the NACK information of the first data packet indicates the sequence number of the first data packet.

19. A second communication apparatus, comprising:
a transceiver unit, configured to receive a status report from a first communication apparatus; and
a processing unit, configured to: if the status report comprises negative acknowledgement NACK information of a first data packet, determine that a first variable of the first data packet is less than a first threshold, and retransmit the first data packet or an unsuccessfully received segment in the first data packet to the first communication apparatus, wherein
the first data packet is an unsuccessfully received data packet, and the first variable of the first data packet indicates a quantity of feedback times of the NACK information of the first data packet.

20. The apparatus according to claim 19, wherein the processing unit is further configured to: if a quantity of retransmissions of the first data packet is equal to a second threshold, discard the first data packet.

21. A communication apparatus, wherein the communication apparatus comprises a processor and a storage medium, the storage medium stores instructions, and when the instructions are run by the processor, the method according to any one of claims 1 to 8 is implemented, or the method according to claim 9 or 10 is implemented.

22. A computer-readable storage medium, wherein the computer-readable storage medium comprises instructions, and when the instructions are run by a processor, the method according to any one of claims 1 to 8 is implemented, or the method according to claim 9 or 10 is implemented.

23. A communication method, wherein the communication method comprises the method according to any one of claims 1 to 8 and the method according to claim 9 or 10.

24. A communication system, wherein the communication system comprises a first communication apparatus and a second communication apparatus, the first communication apparatus is configured to perform the method according to any one of claims 1 to 8, and the second communication apparatus is configured to perform the method according to claim 9 or 10.
